(19) Europäisches Patentamt / European Patent Office / Office européen des brevets

(11) **EP 3 439 211 B1**

(12) **EUROPEAN PATENT SPECIFICATION**

(45) Date of publication and mention
of the grant of the patent:
**21.10.2020 Bulletin 2020/43**

(21) Application number: **17773334.2**

(22) Date of filing: **31.03.2017**

(51) Int Cl.:
*H04L 1/00* (2006.01)     *H04L 5/00* (2006.01)
*H04W 72/04* (2009.01)     *H04L 1/16* (2006.01)

(86) International application number:
**PCT/CN2017/079174**

(87) International publication number:
**WO 2017/167305 (05.10.2017 Gazette 2017/40)**

(54) **METHOD, DEVICE, AND COMPUTER STORAGE MEDIA FOR TRANSMITTING SIGNALS**

VERFAHREN, VORRICHTUNG UND COMPUTERSPEICHERMEDIEN ZUR SIGNALÜBERTRAGUNG

PROCÉDÉ, DISPOSITIF ET SUPPORT DE STOCKAGE INFORMATIQUE PERMETTANT DE TRANSMETTRE DES SIGNAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2016 CN 201610203336**
**10.08.2016 CN 201610654499**
**01.10.2016 CN 201610875565**

(43) Date of publication of application:
**06.02.2019 Bulletin 2019/06**

(73) Proprietor: **ZTE Corporation**
**Shenzhen, Guangdong 518057 (CN)**

(72) Inventors:
• **ZHANG, Wen**
**Shenzhen**
**Guangdong 518057 (CN)**
• **XIA, Shuqiang**
**Shenzhen**
**Guangdong 518057 (CN)**
• **DAI, Bo**
**Shenzhen**
**Guangdong 518057 (CN)**
• **LIANG, Chunli**
**Shenzhen**
**Guangdong 518057 (CN)**
• **SHI, Jing**
**Shenzhen**
**Guangdong 518057 (CN)**
• **HAN, Xianghui**
**Shenzhen**
**Guangdong 518057 (CN)**
• **ZHANG, Wenfeng**
**Shenzhen**
**Guangdong 518057 (CN)**

(74) Representative: **Tiburzi, Andrea et al**
**Barzanò & Zanardo Roma S.p.A.**
**Via Piemonte 26**
**00187 Roma (IT)**

(56) References cited:
**EP-A1- 3 413 496**     **EP-A1- 3 429 114**
**CN-A- 101 286 970**     **CN-A- 101 902 313**
**CN-A- 102 377 537**     **US-A1- 2011 310 855**
**US-A1- 2011 310 855**     **US-A1- 2012 320 852**
**US-A1- 2015 078 222**

• **ZTE: 'Uplink DMRS for PUSCH in Short TTI' 3GPP TSG RAN WG1 MEETING #84, RL-160987 06 February 2016, XP051064474**

**Description**

**TECHNICAL FIELD**

The disclosure relates to a wireless communication technology, and particularly to a signal transmission method and device and a computer storage medium.

**BACKGROUND**

Rapid development of the mobile Internet and the Internet of things brings explosive growth of data traffic and extensive rise of diversified and differentiated services. Compared with 4th Generation (4G), 5th Generation (5G), as a new-generation mobile communication technology, may support higher rates (Gbps), massive links (1M/Km2), ultra-low delays (1ms), higher reliability, hundredfold energy efficiency improvements and the like to support new requirement changes. Ultra-low delay, as a key index of the 5G technology, brings direct influence to development of delay-constrained services of the Internet of vehicles, industrial automation, remote control, the smart grid and the like. At present, a series of standard researches about 5G delay reduction are being gradually promoted.

Transmission Time Interval (TTI) reduction, as an important research direction of present delay reduction, aims to reduce an existing TTI with a 1ms length to 0.5ms and even a length of 1-2 Orthogonal Frequency Division Multiplexing (OFDM) symbols, a minimum scheduling time is reduced exponentially and a single transmission delay may also be reduced exponentially without changing a frame structure.

In Long Term Evolution (LTE), Uplink Control Information (UCI) may be transmitted on a Physical Uplink Shared Channel (PUSCH). After a TTI is shortened, a position and manner defined in an existing protocol for transmission of UCI are inapplicable anymore and a new transmission manner is required to be defined for short TTI transmission. There is yet no effective solution to this.

US2012320852A1 teaches a method for transmitting an uplink signal. The method includes: channel encoding control information; and multiplexing the channel encoded control information with a plurality of data blocks by performing channel interleaving.

US2011310855A1 teaches a method for multiplexing uplink control information (UCI) on a physical uplink shared channel (PUSCH). The method includes: coding control data with user data repetition; mapping the coded control data to a PUSCH resource; and mapping a data block base for the coded control data in the PUSCH resource.

**SUMMARY**

For solving the foregoing technical problem, embodiments of the disclosure provide a signal transmission method and device and a computer storage medium. Throughout the description any references to embodiments which do not fall within the scope of the claims are to be regarded as related examples useful for understanding the invention. The embodiments of the disclosure provide a signal transmission method, which may include the following operations.

When UCI and/or data information are/is required to be transmitted on a PUSCH, a target content is processed and transmitted according to at least one of a preset operation and a notification message of a base station; or when a predetermined transmission time of the UCI or a Sounding Reference Signal (SRS) is overlapped with a transmission time of the data information, the target content is processed and transmitted according to at least one of the preset operation and the notification message of the base station.

In the embodiments of the disclosure, the UCI may include at least one of:
a Channel Quality Indicator (CQI)/Precoding Matrix Indicator (PMI), a Hybrid Automatic Repeat Request-Acknowledgement (HARQ-ACK), a Rank Indication (RI) and a Channel State Information Reference Signal (CSI-RS) Resource Indicator (CRI).

In the embodiments of the disclosure, the method may further include the following operations.

Multiplexing and interleaving processing is performed on at least one of the UCI to be reported and the data information in a specified manner, or multiplexing and interleaving processing is performed on the UCI to be reported.

The processed information is born on the PUSCH for transmission.

In the embodiments of the disclosure, the operation that multiplexing and interleaving processing is performed may include the following operations.

When a first content is required to be reported, a multiplexing sequence is generated according to the first content, the first content being at least one of the following contents: the RI/CRI, the CQI/PMI and the data information.

An interleaving matrix is established, and the multiplexing sequence is written into the interleaving matrix.

When the HARQ-ACK is also required to be reported, the HARQ-ACK is written into the interleaving matrix upwards from a last row of the interleaving matrix, the HARQ-ACK being written into part of columns or all of the columns.

The obtained interleaving matrix is read out column by column to complete multiplexing and interleaving processing.

In the embodiments of the disclosure, the operation that the multiplexing sequence is generated according to the first content may include the following operations.

When the first content required to be reported includes the RI/CRI and does not include the CQI/PMI and the data information, the RI/CRI is determined as the multiplexing sequence.

When the first content required to be reported includes the CQI/PMI and does not include the RI/CRI and the data information, the CQI/PMI is determined as the multiplexing sequence.

When the first content required to be reported includes the data information and does not include the CQI/PMI and the RI/CRI, the data information is determined as the multiplexing sequence.

When the first content required to be reported includes at least two of the RI/CRI, the CQI/PMI and the data information, the at least two of the RI/CRI, the CQI/PMI and the data information are cascaded to obtain the multiplexing sequence.

In the embodiments of the disclosure, the operation that the at least two of the RI/CRI, the CQI/PMI and the data information are cascaded to obtain the multiplexing sequence when the first content required to be reported includes the at least two of the RI/CRI, the CQI/PMI and the data information may include the following operations.

When the UCI and the data information are required to be reported, cascading is performed in a manner that the UCI is before the data information to obtain the multiplexing sequence.

When the RI/CRI and the CQI/PMI are required to be reported, cascading is performed in a manner that the RI/CRI is before the CQI/PMI to obtain the multiplexing sequence.

In the embodiments of the disclosure, the operation that multiplexing and interleaving processing is performed may include the following operations.

When the first content is required to be reported, the multiplexing sequence is generated according to the first content, the first content being at least one of the following contents: the RI/CRI, the CQI/PMI and the data information.

The interleaving matrix is established and the multiplexing sequence is written into the interleaving matrix.

When the HARQ-ACK is also required to be reported, the HARQ-ACK is written into the interleaving matrix downwards from a first row of the interleaving matrix, the HARQ-ACK being written into part of the columns or all of the columns.

The obtained interleaving matrix is read out column by column to complete multiplexing and interleaving processing.

In the embodiments of the disclosure, the operation that the multiplexing sequence is generated according to the first content may include the following operations.

When the first content required to be reported includes the RI/CRI and does not include the CQI/PMI and the data information, the RI/CRI is determined as the multiplexing sequence.

When the first content required to be reported includes the CQI/PMI and does not include the RI/CRI and the data information, the CQI/PMI is determined as the multiplexing sequence.

When the first content required to be reported includes the data information and does not include the CQI/PMI and the RI/CRI, the data information is determined as the multiplexing sequence.

When the first content required to be reported includes at least two of the RI/CRI, the CQI/PMI and the data information, the at least two of the RI/CRI, the CQI/PMI and the data information are cascaded to obtain the multiplexing sequence.

In the embodiments of the disclosure, the operation that the at least two of the RI/CRI, the CQI/PMI and the data information are cascaded to obtain the multiplexing sequence when the first content required to be reported includes the at least two of the RI/CRI, the CQI/PMI and the data information may include the following operations.

When the UCI and the data information are required to be reported, cascading is performed in a manner that the data information is before the UCI to obtain the multiplexing sequence.

When the RI/CRI and the CQI/PMI are required to be reported, cascading is performed in a manner that the CQI/PMI is before the RI/CRI to obtain the multiplexing sequence.

In the embodiments of the disclosure, the operation that multiplexing and interleaving processing is performed may include the following operations.

When the first content is required to be reported, the multiplexing sequence is generated according to the first content, the first content being at least one of the following contents: the CQI/PMI and the data information.

The interleaving matrix is established and, when the RI/CRI is required to be reported, the RI/CRI is written into the interleaving matrix upwards from the last row of the interleaving matrix.

Locations corresponding to the RI/CRI are skipped and the multiplexing sequence is written into the interleaving matrix.

When the HARQ-ACK is also required to be reported, the HARQ-ACK is written into the interleaving matrix upwards from a specified location of the interleaving matrix.

The obtained interleaving matrix is read out column by column to complete multiplexing and interleaving processing.

In the embodiments of the disclosure, the operation that the multiplexing sequence is generated according to the first content may include the following operations.

When the first content required to be reported includes the CQI/PMI and does not include the data information, the CQI/PMI is determined as the multiplexing sequence.

When the first content required to be reported includes the data information and does not include the CQI/PMI, the data information is determined as the multiplexing sequence.

When the first content required to be reported includes the CQI/PMI and the data information, the CQI/PMI and the data information are cascaded to obtain the multiplexing sequence.

In the embodiments of the disclosure, the operation that multiplexing and interleaving processing is performed may include the following operations.

When the data information is required to be reported, the data information is determined as the multiplexing sequence.

The interleaving matrix is established and, when the CQI/PMI is also required to be reported, the CQI/PMI is written into the interleaving matrix downwards from the first row of the interleaving matrix, the CQI/PMI being written into part of the columns or all of the columns of the interleaving matrix.

When the RI/CRI is required to be reported, the RI/CRI is written into the interleaving matrix upwards from the last row of the interleaving matrix.

Locations corresponding to at least one of the RI/CRI and the CQI/PMI are skipped and the multiplexing sequence is written into the interleaving matrix according to a sequence of rows at first and then columns.

When the HARQ-ACK is also required to be reported, the HARQ-ACK is written into the interleaving matrix upwards from the specified location of the interleaving matrix.

The obtained interleaving matrix is read out column by column to complete multiplexing and interleaving processing.

In the embodiments of the disclosure, the operation that the HARQ-ACK is written into the interleaving matrix upwards from the specified location of the interleaving matrix may include one of the following operations.

When the RI/CRI and the HARQ-ACK are required to be reported, the RI/CRI is written into the interleaving matrix upwards from the last row of the interleaving matrix, and the HARQ-ACK is written into the interleaving matrix from a previous row of the end of the RI/CRI or is written into the interleaving matrix from a non-RI/CRI location in an ending row of the RI/CRI.

When no RI/CRI but the HARQ-ACK is required to be reported, the HARQ-ACK is written into the interleaving matrix upwards from the last row of the interleaving matrix in a specified manner.

In the embodiments of the disclosure, the operation that the HARQ-ACK is written into the interleaving matrix upwards from the specified location of the interleaving matrix may include one of the following operations.

When the HARQ-ACK is required to be reported, the HARQ-ACK is written into the interleaving matrix upwards from the last row of the interleaving matrix.

In the embodiments of the disclosure, the RI/CRI or the HARQ-ACK may be written into all or part of the columns of the interleaving matrix.

In the embodiments of the disclosure, when the RI/CRI is required to be reported, the RI/CRI may be written into a first specified column upwards from the last row of the interleaving matrix in the specified manner.

When the HARQ-ACK is required to be reported, the HARQ-ACK is written into a second specified column upwards from the last row of the interleaving matrix in the specified manner.

In the embodiments of the disclosure, the first specified column and the second specified column may include at least one of the following conditions.

The first specified column refers to x columns corresponding to x symbols adjacent to one side of a symbol where a De Modulation Reference Signal (DMRS) is located and the second specified column refers to y columns corresponding to y symbols adjacent to the other side of the symbol where the DMRS is located.

The first specified column refers to a column corresponding to the symbol where the DMRS is located and the x columns corresponding to the x symbols adjacent to one side of the symbol where the DMRS is located and the second specified column refers to the y columns corresponding to the y symbols adjacent to the other side of the symbol where the DMRS is located.

The first specified column refers to the x columns corresponding to the x symbols adjacent to one side of the symbol where the DMRS is located and the second specified column refers to the column corresponding to the symbol where the DMRS is located and the y columns corresponding to the y symbols adjacent to the other side of the symbol where the DMRS is located.

The first specified column refers to the column corresponding to the symbol where the DMRS is located and the x columns corresponding to the x symbols adjacent to one side of the symbol where the DMRS is located and the second specified column refers to the column corresponding to the symbol where the DMRS is located and the y columns corresponding to the y symbols adjacent to the other side of the symbol where the DMRS is located.

The first specified column refers to first z1 columns of the interleaving matrix and the second specified column refers to last z2 columns of the interleaving matrix.

The first specified column refers to last z1 columns of the interleaving matrix and the second specified column refers to first z2 columns of the interleaving matrix.

The first specified column refers to a column corresponding to a symbol closest to the symbol where the DMRS is located and the second specified column refers to a column corresponding to a symbol second closest to the symbol where the DMRS is located.

X, y, z1 and z2 may be positive integers.

Adjacency may refer to physical adjacency or logical adjacency.

In the embodiments of the disclosure, the first specified column and the second specified column may include at least one of the following conditions.

The first specified column refers to x columns corresponding to x symbols adjacent to two sides of the symbol where the DMRS is located and the second specified column refers to y columns corresponding to y symbols adjacent to the first specified column.

The second specified column refers to the x columns corresponding to the x symbols adjacent to the two sides of the symbol where the DMRS is located and the first specified column refers to y columns corresponding to y symbols adjacent to the second specified column.

The first specified column refers to the column corresponding to the symbol where the DMRS is located and the x columns corresponding to the x symbols adjacent to the two sides of the symbol where the DMRS is located and the second specified column refers to the y columns corresponding to the y symbols adjacent to the first specified column.

The second specified column refers to the column corresponding to the symbol where the DMRS is located and the x columns corresponding to the x symbols adjacent to the two sides of the symbol where the DMRS is located and the first specified column refers to the y columns corresponding to the y symbols adjacent to the second specified column.

X and y may be positive integers.

Adjacency may refer to physical adjacency or logical adjacency.

In the embodiments of the disclosure, the operation that multiplexing and interleaving processing is performed may include the following operations.

The interleaving matrix is established and, when the RI/CRI is required to be reported, the RI is written into all of the columns or part of the columns of the interleaving matrix downwards from the first row of the interleaving matrix.

When at least one of the CQI/PMI and the data information is required to be reported, the at least one of the CQI/PMI and the data information is cascaded according to a specified sequence to generate the multiplexing sequence, the locations corresponding to the RI/CRI are skipped and the multiplexing sequence is written into the interleaving matrix.

When the HARQ-ACK is also required to be reported, the HARQ-ACK is written into the interleaving matrix upwards from the last row of the interleaving matrix, the HARQ-ACK being written into part of the columns or all of the columns.

The obtained interleaving matrix is read out column by column to complete multiplexing and interleaving processing.

In the embodiments of the disclosure, the operation that multiplexing and interleaving processing is performed may include the following operations.

The interleaving matrix is established and, when at least one of the RI/CRI and the CQI/PMI is required to be reported, the at least one of the RI/CRI and the CQI/PMI is written into the interleaving matrix column by column from a first column of the interleaving matrix according to the specified sequence.

When the data information is required to be reported, the data information is determined as the multiplexing sequence, the locations corresponding to the RI/CRI and/or the CQI/PMI are skipped and the multiplexing sequence is written into the interleaving matrix.

When the HARQ-ACK is also required to be reported, the HARQ-ACK is written into the interleaving matrix upwards from the last row of the interleaving matrix, the HARQ-ACK being written into part of the columns or all of the columns.

The obtained interleaving matrix is read out column by column to complete multiplexing and interleaving processing.

In the embodiments of the disclosure, when the RI/CRI and the CQI/PMI are required to be reported, from the first column of the interleaving matrix, the RI/CRI may be written at first and then the CQI/PMI may be written.

In the embodiments of the disclosure, the operation that multiplexing and interleaving processing is performed may include the following operations.

The interleaving matrix is established and, when the RI/CRI is required to be reported, the RI/CRI is written into the interleaving matrix downwards from the first row of the interleaving matrix, the RI/CRI being written into part of the columns or all of the columns.

When the CQI/PMI is also required to be reported, the CQI/PMI is written into the interleaving matrix downwards from a specified row, the CQI/PMI being written into part of the columns or all of the columns.

When data is also required to be sent, the locations corresponding to at least one of the RI/CRI and the CQI/PMI are skipped and the data is written into the interleaving matrix.

When the HARQ-ACK is also required to be reported, the HARQ-ACK is written into the interleaving matrix upwards from the last row of the interleaving matrix, the HARQ-ACK being written into part of the columns or all of the columns.

The obtained interleaving matrix is read out column by column to complete multiplexing and interleaving processing.

In the embodiments of the disclosure, the specified row may be the first row, or the ending row of the written RI/CRI or a next row of the ending row of the written RI/CRI.

In the embodiments of the disclosure, the operation that multiplexing and interleaving processing is performed may include the following operations.

The interleaving matrix is established and, when the RI/CRI is required to be reported, the RI/CRI is written into the interleaving matrix upwards from the last row of the interleaving matrix, the RI/CRI being written into part of the columns or all of the columns.

When the CQI/PMI is also required to be reported, the CQI/PMI is written into the interleaving matrix upwards from the specified row, the CQI/PMI being written into part of the columns or all of the columns.

When data is also required to be sent, the locations corresponding to at least one of the RI/CRI and the CQI/PMI are skipped and the data is written into the interleaving matrix.

When the HARQ-ACK is also required to be reported, the HARQ-ACK is written into the interleaving matrix downwards from a first row of the interleaving matrix, the HARQ-ACK being written into part of the columns or all of the columns.

The obtained interleaving matrix is read out column by column to complete multiplexing and interleaving processing.

In the embodiments of the disclosure, the specified row may be the last row, or the ending row of the written RI/CRI or the previous row of the ending row of the written RI/CRI.

In the embodiments of the disclosure, the RI/CRI and the HARQ-ACK may be written into the same column.

In the embodiments of the disclosure, part of the columns may refer to one of:

columns corresponding to A symbols adjacent to the two sides of the symbol where the DMRS is located, A being a positive integer;
the column corresponding to the symbol where the DMRS is located and columns corresponding to B symbols adjacent to the two sides of the symbol where the DMRS is located, B being a nonnegative integer;
columns corresponding to C symbols adjacent to one side of the symbol where the DMRS is located, C being a positive integer;
the column corresponding to the symbol where the DMRS is located and columns corresponding to D symbols adjacent to one side of the symbol where the DMRS is located, D being a nonnegative integer;
first E columns, E being a positive integer less than or equal to N;
last F columns, F being a positive integer less than or equal to N; and
preset columns.

Adjacency may refer to physical adjacency or logical adjacency.

In the embodiments of the disclosure, the method may further include the following operation.

When the data information is required to be transmitted on the PUSCH, the interleaving matrix is established and the data information is written into the interleaving matrix column by column.

In the embodiments of the disclosure, the interleaving matrix may be determined by at least one of a transmission time of the target content, locations of the DMRS and an SRS configuration.

In the embodiments of the disclosure, when the interleaving matrix is written, the interleaving matrix may be written according to the sequence of rows at first and then columns or the interleaving matrix may be written according to a sequence of columns at first and then rows.

In the embodiments of the disclosure, when the DMRS and uplink information are multiplexed in a symbol, the locations corresponding to the DMRS in the interleaving matrix may be required to be skipped when all of the uplink information is written into the interleaving matrix.

In the embodiments of the disclosure, the method may further include the following operation.

A transmission manner when the predetermined transmission time of the UCI or the SRS and the transmission time of the data information is determined according to at least one of the preset operation and the notification message of the base station.

In the embodiments of the disclosure, the transmission manner may be indicated by at least one of:

Radio Resource Control (RRC) signaling;
a System Information Block (SIB); and
an uplink grant corresponding to the PUSCH.

In the embodiments of the disclosure, the method may further include the following operation.

All or part of the UCI is aborted to be transmitted or all or part of the UCI is deferred to be transmitted.

In the embodiments of the disclosure, when the UCI includes HARQ-ACK information of M transport blocks, the HARQ-ACK information of all or part of the transport blocks may be transmitted at the transmission time of the target content, M>1.

In the embodiments of the disclosure, the HARQ-ACK information of part of the transport blocks may be transmitted at the transmission time of the target content, transmission durations of part of the transport blocks being all shorter than transmission durations of the other transport blocks.

In the embodiments of the disclosure, when the predetermined transmission time of the SRS is overlapped with the transmission time of the data information, no DMRS but the data information may be transmitted at locations corresponding to all or part of DMRSs at the transmission time of the target content.

In the embodiments of the disclosure, when the predetermined transmission time of the UCI is overlapped with the transmission time of the data information, all or part of the UCI may be transmitted according to the DMRS at the transmission time of the target content.

In the embodiments of the disclosure, the method may further include the following operations.

All or part of the UCI is transmitted according to at least one of:

a frequency-domain location occupied by the DMRS,
the symbol occupied by the DMRS and
a sequence corresponding to the DMRS.

A modulation symbol of all or part of the UCI is adopted to modulate the DMRS.

In the embodiments of the disclosure, a code rate corresponding to the information may meet a specified threshold requirement.

In the embodiments of the disclosure, a code rate of the information on a specified symbol may meet the specified threshold requirement.

In the embodiments of the disclosure, a code rate of the data information on first n symbols transmitting the data information may be not higher than 0.931 or 0.93 or 1, n being less than or equal to the total number of symbols transmitting the data information.

The embodiments of the disclosure provide a signal transmission device, which may include a processing and transmission unit.

The processing and transmission unit may be configured to, when at least one of UCI and/or data information is required to be transmitted on a PUSCH, process and transmit a target content according to at least one of a preset operation and a notification message of a base station; or,

the processing and transmission unit may be configured to, when a predetermined transmission time of the UCI or an SRS is overlapped with a transmission time of the data information, process and transmit the target content according to at least one of the preset operation and the notification message of the base station.

In the embodiments of the disclosure, the UCI may include at least one of a CQI/PMI, a HARQ-ACK, an RI and a CRI.

The processing and transmission unit may include a processing subunit and a transmission subunit.

The processing subunit may be configured to perform multiplexing and interleaving processing on at least one of the UCI to be reported and the data information in a specified manner or perform multiplexing and interleaving processing on the UCI to be reported.

The transmission subunit may be configured to bear the processed information on the PUSCH for transmission.

In the embodiments of the disclosure, the processing subunit may further be configured to, when a first content is required to be reported, generate a multiplexing sequence according to the first content, the first content being at least one of the following contents: the RI/CRI, the CQI/PMI and the data information; establish an interleaving matrix and write the multiplexing sequence into the interleaving matrix; when the HARQ-ACK is also required to be reported, write the HARQ-ACK into the interleaving matrix upwards from a last row of the interleaving matrix, the HARQ-ACK being written into part of columns or all of the columns; and read out the obtained interleaving matrix column by column to complete multiplexing and interleaving processing.

In the embodiments of the disclosure, the processing subunit may further be configured to, when the first content is required to be reported, generate the multiplexing sequence according to the first content, the first content being at least one of the following contents: the RI/CRI, the CQI/PMI and the data information; establish the interleaving matrix and write the multiplexing sequence into the interleaving matrix; when the HARQ-ACK is also required to be reported, write the HARQ-ACK into the interleaving matrix downwards from a first row of the interleaving matrix, the HARQ-ACK being written into part of the columns or all of the columns; and read out the obtained interleaving matrix column by column to complete multiplexing and interleaving processing.

In the embodiments of the disclosure, the processing subunit may further be configured to, when the first content is required to be reported, generate the multiplexing sequence according to the first content, the first content being at least one of the following contents: the CQI/PMI and the data information; establish the interleaving matrix and, when the RI/CRI is required to be reported, write the RI/CRI into the interleaving matrix upwards from the last row of the interleaving matrix; skip locations corresponding to the RI/CRI and write the multiplexing sequence into the interleaving matrix; when the HARQ-ACK is also required to be reported, write the HARQ-ACK into the interleaving matrix upwards from a specified location of the interleaving matrix; and read out the obtained interleaving matrix column by column to complete multiplexing and interleaving processing.

In the embodiments of the disclosure, the processing subunit may further be configured to, when the data information is required to be reported, determine the data information as the multiplexing sequence; establish the interleaving matrix and, when the CQI/PMI is required to be reported, write the CQI/PMI into the interleaving matrix downwards from the first row of the interleaving matrix, the CQI/PMI being written into part of the columns or all of the columns of the interleaving matrix; when the RI/CRI is required to be reported, write the RI/CRI into the interleaving matrix upwards from the last row of the interleaving matrix; skip locations corresponding to at least one of the RI/CRI and the CQI/PMI and write the multiplexing sequence into the interleaving matrix according to a sequence of rows at first and then columns; when the HARQ-ACK is also required to be reported, write the HARQ-ACK into the interleaving matrix upwards from the specified location of the interleaving matrix; and read out the obtained interleaving matrix column by column to complete multiplexing and interleaving processing.

In the embodiments of the disclosure, the processing subunit may further be configured to establish the interleaving matrix and, when the RI/CRI is required to be reported, write the RI into all of the columns or part of the columns of the interleaving matrix downwards from the first row of the interleaving matrix; when at least one of the CQI/PMI and the data information is required to be reported, cascade the at least one of the CQI/PMI and the data information according to a specified sequence to generate the multiplexing sequence, skip the locations corresponding to the RI/CRI and write the multiplexing sequence into the interleaving matrix; when the HARQ-ACK is also required to be reported, write the HARQ-ACK into the interleaving matrix upwards from the last row of the interleaving matrix, the HARQ-ACK being written into part of the columns or all of the columns; and read out the obtained interleaving matrix column by column to complete multiplexing and interleaving processing.

In the embodiments of the disclosure, the processing subunit may further be configured to establish the interleaving matrix and, when at least one of the RI/CRI and the CQI/PMI is required to be reported, write the at least one of the RI/CRI and the CQI/PMI into the interleaving matrix from a first column of the interleaving matrix according to the specified sequence; when the data information is required to be reported, determine the data information as the multiplexing sequence, skip the locations corresponding to at least one of the RI/CRI and/or the CQI/PMI and write the multiplexing sequence into the interleaving matrix; when the HARQ-ACK is also required to be reported, write the HARQ-ACK into the interleaving matrix upwards from the last row of the interleaving matrix, the HARQ-ACK being written into part of the columns or all of the columns; and read out the obtained interleaving matrix column by column to complete multiplexing and interleaving processing.

In the embodiments of the disclosure, the processing subunit may further be configured to establish the interleaving matrix and, when the RI/CRI is required to be reported, write the RI/CRI into the interleaving matrix downwards from the first row of the interleaving matrix, the RI/CRI being written into part of the columns or all of the columns; when the CQI/PMI is also required to be reported, write the CQI/PMI into the interleaving matrix downwards from a specified row, the CQI/PMI being written into part of the columns or all of the columns; when data is also required to be sent, skip the locations corresponding to at least one of the RI/CRI and the CQI/PMI and write the data into the interleaving matrix; when the HARQ-ACK is also required to be reported, write the HARQ-ACK into the interleaving matrix upwards from the last row of the interleaving matrix, the HARQ-ACK being written into part of the columns or all of the columns; and read out the obtained interleaving matrix column by column to complete multiplexing and interleaving processing.

In the embodiments of the disclosure, the processing subunit may further be configured to establish the interleaving matrix and, when the RI/CRI is required to be reported, write the RI/CRI into the interleaving matrix upwards from the last row of the interleaving matrix, the RI/CRI being written into part of the columns or all of the columns; when the CQI/PMI is also required to be reported, write the CQI/PMI into the interleaving matrix upwards from the specified row, the CQI/PMI being written into part of the columns or all of the columns; when data is also required to be sent, skip the locations corresponding to at least one of the RI/CRI and the CQI/PMI and write the data into the interleaving matrix;

when the HARQ-ACK is also required to be reported, write the HARQ-ACK into the interleaving matrix downwards from the first row of the interleaving matrix, the HARQ-ACK being written into part of the columns or all of the columns; and read out the obtained interleaving matrix column by column to complete multiplexing and interleaving processing.

The embodiments of the disclosure provide a computer storage medium, which may store a computer program, the computer program being configured to execute the abovementioned signal transmission method.

In the technical solutions of the embodiments of the disclosure, when the UCI or the data information is required to be transmitted on the PUSCH, the target content is processed and transmitted according to at least one of the preset operation and the notification message of the base station; and when the predetermined transmission time of the UCI or the SRS is overlapped with the transmission time of the data information, the target content is processed and transmitted according to at least one of the preset operation and the notification message of the base station. Implementing the technical solutions of the embodiments of the disclosure realizes transmission of the UCI on the PUSCH in a short TTI scenario.

## BRIEF DESCRIPTION OF DRAWINGS

FIG. 1 is a flowchart of a signal transmission method according to an embodiment of the disclosure.

FIG. 2 is a first multiplexing diagram of UCI and data when a TTI includes seven symbols according to an embodiment of the disclosure.

FIG. 3 is a multiplexing diagram of UCI and data when a TTI includes four symbols according to an embodiment of the disclosure.

FIG. 4 is a multiplexing diagram of UCI and data when a TTI includes three symbols according to an embodiment of the disclosure.

FIG. 5 is a multiplexing diagram of UCI and data when a TTI includes two symbols according to an embodiment of the disclosure.

FIG. 6 is a multiplexing diagram of UCI and data when a TTI includes one symbol according to an embodiment of the disclosure.

FIG. 7 is a schematic diagram of cascading a CQI/PMI and data according to an embodiment of the disclosure.

FIG. 8 is a first schematic diagram of multiplexing UCI and data according to an embodiment of the disclosure.

FIG. 9 is a second schematic diagram of multiplexing UCI and data according to an embodiment of the disclosure.

FIG. 10 is a schematic diagram of writing into columns corresponding to symbols on the two sides or one side of a DMRS symbol according to an embodiment of the disclosure.

FIG. 11 is a schematic diagram of writing a HARQ-ACK from a last row of an interleaving matrix under the condition of no RI according to an embodiment of the disclosure.

FIG. 12 is a third schematic diagram of multiplexing UCI and data according to an embodiment of the disclosure.

FIG. 13 is a fourth schematic diagram of multiplexing UCI and data according to an embodiment of the disclosure.

FIG. 14 is a fifth schematic diagram of multiplexing UCI and data according to an embodiment of the disclosure.

FIG. 15 is a sixth schematic diagram of multiplexing UCI and data according to an embodiment of the disclosure.

FIG. 16 is a second multiplexing diagram of UCI and data when a TTI includes seven symbols according to an embodiment of the disclosure.

FIG. 17 is a seventh schematic diagram of multiplexing UCI and data according to an embodiment of the disclosure.

FIG. 18 is an eighth schematic diagram of multiplexing UCI and data according to an embodiment of the disclosure.

FIG. 19 is a ninth schematic diagram of multiplexing UCI and data according to an embodiment of the disclosure.

FIG. 20 is a structure composition schematic diagram of a signal transmission device according to an embodiment of the disclosure.

FIG. 21 is a tenth schematic diagram of multiplexing UCI and data according to an embodiment of the disclosure.

FIG. 22 is a 5G network architecture.

## DETAILED DESCRIPTION

In order to make the characteristics and technical contents of the embodiments of the disclosure understood in more detail, implementation of the embodiments of the disclosure will be described below in combination with the drawings in detail. The drawings are only adopted for description as references and not intended to limit the embodiments of the disclosure.

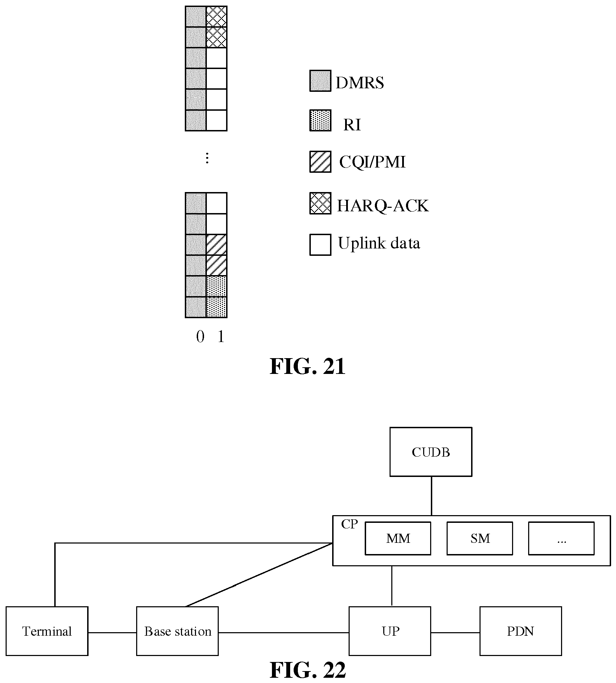

FIG. 22 is a 5G network architecture. Each network element in the 5G network architecture has the following functions.

A terminal mainly accesses a 5G network and obtains service through a wireless air interface. The terminal performs information interaction with a base station through the air interface.

The base station is responsible for air interface resource scheduling for access of the terminal to the network and connection management over the air interface.

A Centralized User Database (CUDB) at least stores dynamic user data, for example, a Mobility Management (MM) context, a session context and a user state.

A Control Plane (CP) includes MM, Session Management (SM) and the like, and is mainly responsible for authentication, authorization and subscription checking of a user to ensuring that the user is a legal user; MM of the user, including location registration and temporary identifier allocation; maintenance of IDLE and CONNECT states and state transition; switching in the CONNECT state; maintenance of a Protocol Data Unit (PDU) session, including SM of creation, modification, deletion and the like; and paging triggering in the IDLE state of the user and the like.

A User Plane (UP) is a core network UP entity responsible for allocating an Internet Protocol (IP) address of the user and with functions of Quality of Service (QoS) control and charging and the like.

A signal transmission method of the embodiments of the disclosure is based on, but not limited to, the above network scenario.

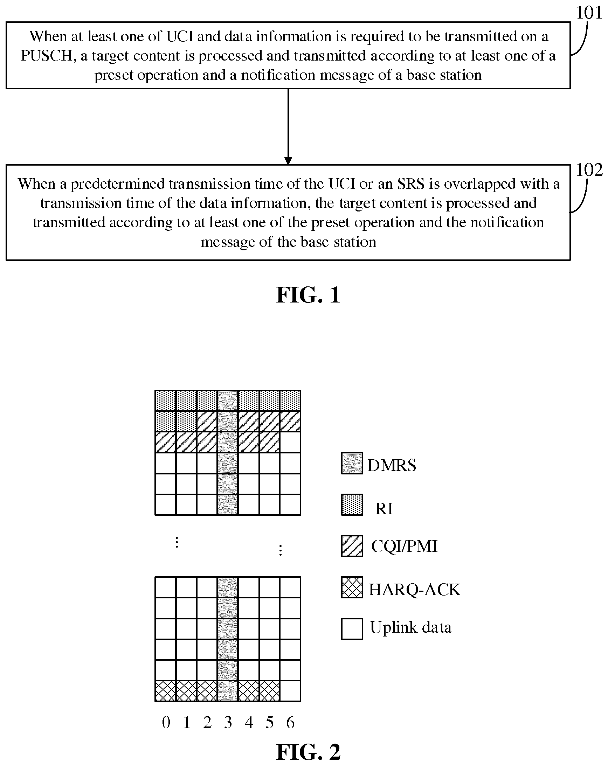

FIG. 1 is a flowchart of a signal transmission method according to an embodiment of the disclosure. As shown in FIG. 1, the signal transmission method includes the following steps.

In 101, when at least one of UCI and/or data information is required to be transmitted on a PUSCH, a target content is processed and transmitted according to at least one of a preset operation and a notification message of a base station.

In 102, when a predetermined transmission time of the UCI or an SRS is overlapped with a transmission time of the data information, the target content is processed and transmitted according to at least one of the preset operation and the notification message of the base station.

Step 101 and Step 102 form an or relationship.

In the embodiment of the disclosure, CQI/PMI means CQI and PMI, and CQI or PMI. That is, one of the CQI and the PMI may appear independently and both of them may also appear simultaneously. RI/CRI means RI or CRI. That is, one of the RI and the CRI may appear independently.

In the embodiment of the disclosure, the UCI includes at least one of:

a CQI/PMI, a HARQ-ACK, an RI and a CRI.

In a first implementation mode of the disclosure, multiplexing and interleaving processing is performed on at least one of the UCI to be reported and the data information in a specified manner, or multiplexing and interleaving processing is performed on the UCI to be reported.

The processed information is born on the PUSCH for transmission.

In the embodiment of the disclosure, the operation that multiplexing and interleaving processing is performed includes the following operations.

When a first content is required to be reported, a multiplexing sequence is generated according to the first content, the first content being at least one of the following contents: the RI/CRI, the CQI/PMI and the data information.

An interleaving matrix is established and the multiplexing sequence is written into the interleaving matrix.

When the HARQ-ACK is also required to be reported, the HARQ-ACK is written into the interleaving matrix upwards from a last row of the interleaving matrix, the HARQ-ACK being written into part of columns or all of the columns.

The obtained interleaving matrix is read out column by column to complete multiplexing and interleaving processing.

In the embodiment of the disclosure, the operation that the multiplexing sequence is generated according to the first content includes the following operations.

When the first content required to be reported includes the RI/CRI and does not include the CQI/PMI and the data information, the RI/CRI is determined as the multiplexing sequence.

When the first content required to be reported includes the CQI/PMI and does not include the RI/CRI and the data information, the CQI/PMI is determined as the multiplexing sequence.

When the first content required to be reported includes the data information and does not include the CQI/PMI and the RI/CRI, the data information is determined as the multiplexing sequence.

When the first content required to be reported includes at least two of the RI/CRI, the CQI/PMI and the data information, the at least two of the RI/CRI, the CQI/PMI and the data information are cascaded to obtain the multiplexing sequence.

In the embodiment of the disclosure, the operation that the at least two of the RI/CRI, the CQI/PMI and the data information are cascaded to obtain the multiplexing sequence when the first content required to be reported includes the at least two of the RI/CRI, the CQI/PMI and the data information includes at least one of the following operations.

When the UCI and the data information are required to be reported, cascading is performed in a manner that the UCI is before the data information to obtain the multiplexing sequence.

When the RI/CRI and the CQI/PMI are required to be reported, cascading is performed in a manner that the RI/CRI is before the CQI/PMI to obtain the multiplexing sequence.

In the embodiment of the disclosure, the operation that multiplexing and interleaving processing is performed includes the following operations.

When the first content is required to be reported, the multiplexing sequence is generated according to the first content, the first content being at least one of the following contents: the RI/CRI, the CQI/PMI and the data information.

The interleaving matrix is established and the multiplexing sequence is written into the interleaving matrix.

When the HARQ-ACK is also required to be reported, the HARQ-ACK is written into the interleaving matrix downwards from a first row of the interleaving matrix, the HARQ-ACK being written into part of the columns or all of the columns.

The obtained interleaving matrix is read out column by column to complete multiplexing and interleaving processing.

The operation that the multiplexing sequence is generated according to the first content includes the following operations.

When the first content required to be reported includes the RI/CRI and does not include the CQI/PMI and the data information, the RI/CRI is determined as the multiplexing sequence.

When the first content required to be reported includes the CQI/PMI and does not include the RI/CRI and the data information, the CQI/PMI is determined as the multiplexing sequence.

When the first content required to be reported includes the data information and does not include the CQI/PMI and the RI/CRI, the data information is determined as the multiplexing sequence.

When the first content required to be reported includes at least two of the RI/CRI, the CQI/PMI and the data information, the at least two of the RI/CRI, the CQI/PMI and the data information are cascaded to obtain the multiplexing sequence.

The operation that the at least two of the RI/CRI, the CQI/PMI and the data information are cascaded to obtain the multiplexing sequence when the first content required to be reported includes the at least two of the RI/CRI, the CQI/PMI and the data information includes at least one of the following operations.

When the UCI and the data information are required to be reported, cascading is performed in a manner that the data information is before the UCI to obtain the multiplexing sequence.

When the RI/CRI and the CQI/PMI are required to be reported, cascading is performed in a manner that the CQI/PMI is before the RI/CRI to obtain the multiplexing sequence.

In the embodiment of the disclosure, the operation that multiplexing and interleaving processing is performed includes the following operations.

When the first content is required to be reported, the multiplexing sequence is generated according to the first content, the first content being at least one of the following contents: the CQI/PMI and the data information.

The interleaving matrix is established and, when the RI/CRI is required to be reported, the RI/CRI is written into the interleaving matrix upwards from the last row of the interleaving matrix.

Locations corresponding to the RI/CRI are skipped and the multiplexing sequence is written into the interleaving matrix.

When the HARQ-ACK is also required to be reported, the HARQ-ACK is written into the interleaving matrix upwards from a specified location of the interleaving matrix.

The obtained interleaving matrix is read out column by column to complete multiplexing and interleaving processing.

In the embodiment of the disclosure, the operation that the multiplexing sequence is generated according to the first content includes the following operations.

When the first content required to be reported includes the CQI/PMI and does not include the data information, the CQI/PMI is determined as the multiplexing sequence.

When the first content required to be reported includes the data information and does not include the CQI/PMI, the data information is determined as the multiplexing sequence.

When the first content required to be reported includes the CQI/PMI and the data information, the CQI/PMI and the data information are cascaded to obtain the multiplexing sequence.

In the embodiment of the disclosure, the operation that multiplexing and interleaving processing is performed includes the following operations.

When the data information is required to be reported, the data information is determined as the multiplexing sequence.

The interleaving matrix is established and, when the CQI/PMI is also required to be reported, the CQI/PMI is written into the interleaving matrix downwards from the first row of the interleaving matrix, the CQI/PMI being written into part of the columns or all of the columns of the interleaving matrix.

When the RI/CRI is required to be reported, the RI/CRI is written into the interleaving matrix upwards from the last row of the interleaving matrix.

Locations corresponding to at least one of the RI/CRI and the CQI/PMI are skipped and the multiplexing sequence is written into the interleaving matrix according to a sequence of rows at first and then columns.

When the HARQ-ACK is also required to be reported, the HARQ-ACK is written into the interleaving matrix upwards from the specified location of the interleaving matrix.

The obtained interleaving matrix is read out column by column to complete multiplexing and interleaving processing.

In the embodiment of the disclosure, the operation that the HARQ-ACK is written into the interleaving matrix upwards from the specified location of the interleaving matrix includes one of the following operations.

When the RI/CRI and the HARQ-ACK are required to be reported, the RI/CRI is written into the interleaving matrix upwards from the last row of the interleaving matrix, and the HARQ-ACK is written into the interleaving matrix from a previous row of the end of the RI/CRI or is written into the interleaving matrix from a non-RI/CRI location in an ending row of the RI/CRI.

When no RI/CRI but the HARQ-ACK is required to be reported, the HARQ-ACK is written into the interleaving matrix upwards from the last row of the interleaving matrix in a specified manner.

In the embodiment of the disclosure, the operation that the HARQ-ACK is written into the interleaving matrix upwards from the specified location of the interleaving matrix includes one of the following operations.

When the HARQ-ACK is required to be reported, the HARQ-ACK is written into the interleaving matrix upwards from the last row of the interleaving matrix.

In the embodiment of the disclosure, the RI/CRI or the HARQ-ACK is written into all or part of the columns of the interleaving matrix.

In the embodiment of the disclosure, when the RI/CRI is required to be reported, the RI/CRI is written into a first specified column upwards from the last row of the interleaving matrix in the specified manner.

When the HARQ-ACK is required to be reported, the HARQ-ACK is written into a second specified column upwards from the last row of the interleaving matrix in the specified manner.

In the embodiment of the disclosure, the first specified column and the second specified column include at least one of the following conditions.

The first specified column refers to x columns corresponding to x symbols adjacent to one side of a symbol where a DMRS is located and the second specified column refers to y columns corresponding to y symbols adjacent to the other side of the symbol where the DMRS is located.

The first specified column refers to a column corresponding to the symbol where the DMRS is located and the x columns corresponding to the x symbols adjacent to one side of the symbol where the DMRS is located and the second specified column refers to the y columns corresponding to the y symbols adjacent to the other side of the symbol where the DMRS is located.

The first specified column refers to the x columns corresponding to the x symbols adjacent to one side of the symbol where the DMRS is located and the second specified column refers to the column corresponding to the symbol where the DMRS is located and the y columns corresponding to the y symbols adjacent to the other side of the symbol where the DMRS is located.

The first specified column refers to the column corresponding to the symbol where the DMRS is located and the x columns corresponding to the x symbols adjacent to one side of the symbol where the DMRS is located and the second specified column refers to the column corresponding to the symbol where the DMRS is located and the y columns corresponding to the y symbols adjacent to the other side of the symbol where the DMRS is located.

The first specified column refers to first z1 columns of the interleaving matrix and the second specified column refers to last z2 columns of the interleaving matrix.

The first specified column refers to last z1 columns of the interleaving matrix and the second specified column refers to first z2 columns of the interleaving matrix.

The first specified column refers to a column corresponding to a symbol closest to the symbol where the DMRS is located and the second specified column refers to a column corresponding to a symbol second closest to the symbol where the DMRS is located.

X, y, z1 and z2 are positive integers.

Adjacency refers to physical adjacency or logical adjacency.

In the embodiment of the disclosure, the first specified column and the second specified column include at least one of the following conditions.

The first specified column refers to x columns corresponding to x symbols adjacent to two sides of the symbol where the DMRS is located and the second specified column refers to y columns corresponding to y symbols adjacent to the first specified column.

The second specified column refers to the x columns corresponding to the x symbols adjacent to the two sides of the symbol where the DMRS is located and the first specified column refers to y columns corresponding to y symbols adjacent to the second specified column.

The first specified column refers to the column corresponding to the symbol where the DMRS is located and the x columns corresponding to the x symbols adjacent to the two sides of the symbol where the DMRS is located and the second specified column refers to the y columns corresponding to the y symbols adjacent to the first specified column.

The second specified column refers to the column corresponding to the symbol where the DMRS is located and the x columns corresponding to the x symbols adjacent to the two sides of the symbol where the DMRS is located and the first specified column refers to the y columns corresponding to the y symbols adjacent to the second specified column.

X and y are positive integers.

Adjacency refers to physical adjacency or logical adjacency.

In a third implementation mode of the disclosure, the operation that multiplexing and interleaving processing is performed includes the following operations.

The interleaving matrix is established and, when the RI/CRI is required to be reported, the RI is written into all of the columns or part of the columns of the interleaving matrix downwards from the first row of the interleaving matrix.

When at least one of the CQI/PMI and the data information is required to be reported, the at least one of the CQI/PMI and the data information is cascaded according to a specified sequence to generate the multiplexing sequence, the locations corresponding to the RI/CRI are skipped and the multiplexing sequence is written into the interleaving matrix.

When the HARQ-ACK is also required to be reported, the HARQ-ACK is written into the interleaving matrix upwards from the last row of the interleaving matrix, the HARQ-ACK being written into part of the columns or all of the columns.

The obtained interleaving matrix is read out column by column to complete multiplexing and interleaving processing.

In a fourth implementation mode of the disclosure, the operation that multiplexing and interleaving processing is performed includes the following operations.

The interleaving matrix is established and, when at least one of the RI/CRI and the CQI/PMI is required to be reported, the at least one of the RI/CRI and the CQI/PMI is written into the interleaving matrix column by column from the first column of the interleaving matrix according to the specified sequence.

When the data information is required to be reported, the data information is determined as the multiplexing sequence, the locations corresponding to the RI/CRI and/or the CQI/PMI are skipped and the multiplexing sequence is written into the interleaving matrix.

When the HARQ-ACK is also required to be reported, the HARQ-ACK is written into the interleaving matrix upwards from the last row of the interleaving matrix, the HARQ-ACK being written into part of the columns or all of the columns.

The obtained interleaving matrix is read out column by column to complete multiplexing and interleaving processing.

In the embodiment of the disclosure, when the RI/CRI and the CQI/PMI are required to be reported, from the first column of the interleaving matrix, the RI/CRI is written at first and then the CQI/PMI is written.

In the embodiment of the disclosure, the operation that multiplexing and interleaving processing is performed includes the following operations.

The interleaving matrix is established and, when the RI/CRI is required to be reported, the RI/CRI is written into the interleaving matrix downwards from the first row of the interleaving matrix, the RI/CRI being written into part of the columns or all of the columns.

When the CQI/PMI is also required to be reported, the CQI/PMI is written into the interleaving matrix downwards from a specified row, the CQI/PMI being written into part of the columns or all of the columns.

When data is also required to be sent, the locations corresponding to at least one of the RI/CRI and the CQI/PMI are skipped and the data is written into the interleaving matrix.

When the HARQ-ACK is also required to be reported, the HARQ-ACK is written into the interleaving matrix upwards from the last row of the interleaving matrix, the HARQ-ACK being written into part of the columns or all of the columns.

The obtained interleaving matrix is read out column by column to complete multiplexing and interleaving processing.

In the embodiment of the disclosure, the specified row is the first row, or the ending row of the written RI/CRI or a next row of the ending row of the written RI/CRI.

In the embodiment of the disclosure, the operation that multiplexing and interleaving processing is performed includes the following operations.

The interleaving matrix is established and, when the RI/CRI is required to be reported, the RI/CRI is written into the interleaving matrix upwards from the last row of the interleaving matrix, the RI/CRI being written into part of the columns or all of the columns.

When the CQI/PMI is also required to be reported, the CQI/PMI is written into the interleaving matrix upwards from the specified row, the CQI/PMI being written into part of the columns or all of the columns.

When the data is also required to be sent, the locations corresponding to at least one of the RI/CRI and the CQI/PMI are skipped and the data is written into the interleaving matrix.

When the HARQ-ACK is also required to be reported, the HARQ-ACK is written into the interleaving matrix downwards from the first row of the interleaving matrix, the HARQ-ACK being written into part of the columns or all of the columns.

The obtained interleaving matrix is read out column by column to complete multiplexing and interleaving processing.

In the embodiment of the disclosure, the specified row is the last row, or the ending row of the written RI/CRI or the previous row of the ending row of the written RI/CRI.

In the embodiment of the disclosure, the RI/CRI and the HARQ-ACK are written into the same column.

In the embodiment of the disclosure, part of the columns refer to one of:

A columns corresponding to A symbols adjacent to the two sides of the symbol where the DMRS is located, A being a positive integer;
the column corresponding to the symbol where the DMRS is located and B columns corresponding to B symbols adjacent to the two sides of the symbol where the DMRS is located, B being a nonnegative integer;
C columns corresponding to C symbols adjacent to one side of the symbol where the DMRS is located, C being a positive integer;
the column corresponding to the symbol where the DMRS is located and D columns corresponding to D symbols adjacent to one side of the symbol where the DMRS is located, D being a nonnegative integer;
first E columns, E being a positive integer less than or equal to N;
last F columns, F being a positive integer less than or equal to N; and
preset columns.

Adjacency refers to physical adjacency or logical adjacency.

In the embodiment of the disclosure, the method further includes that: when the data information is required to be transmitted on the PUSCH, the interleaving matrix is established and the data information is written into the interleaving matrix column by column.

In the embodiment of the disclosure, the interleaving matrix is determined by at least one of a transmission time of the target content, locations of the DMRS and an SRS configuration.

In the embodiment of the disclosure, when the interleaving matrix is written, the interleaving matrix is written according to the sequence of rows at first and then columns or the interleaving matrix is written according to a sequence of columns at first and then rows.

In the embodiment of the disclosure, when the DMRS and uplink information are multiplexed in a symbol, the locations corresponding to the DMRS in the interleaving matrix are required to be skipped when all of the uplink information is written into the interleaving matrix.

In the embodiment of the disclosure, the method further includes that: a transmission manner when the predetermined transmission time of the UCI or the SRS is overlapped with the transmission time of the data information is determined according to at least one of the preset operation and the notification message of the base station.

The transmission manner is indicated by at least one of:

RRC signaling;
a SIB; and
an uplink grant corresponding to the PUSCH.

In the embodiment of the disclosure, the method further includes that: all or part of the UCI is aborted to be transmitted or all or part of the UCI is deferred to be transmitted.

In the embodiments of the disclosure, when the UCI includes HARQ-ACK information of M transport blocks, the HARQ-ACK information of all or part of the transport blocks may be transmitted at the transmission time of the target content, $M>1$.

In the embodiments of the disclosure, the HARQ-ACK information of part of the transport blocks may be transmitted at the transmission time of the target content, transmission durations of part of the transport blocks being all shorter than transmission durations of the other transport blocks.

In the embodiment of the disclosure, when the predetermined transmission time of the SRS is overlapped with the transmission time of the data information, no DMRS but the data information is transmitted at all or part of the locations corresponding to the DMRS at the transmission time of the target content.

In the embodiment of the disclosure, when the predetermined transmission time of the UCI is overlapped with the transmission time of the data information, all or part of the UCI is transmitted according to the DMRS at the transmission time of the target content.

In the embodiment of the disclosure, the method further includes the following operations.

All or part of the UCI is transmitted according to at least one of:

a frequency-domain location occupied by the DMRS,
the symbol occupied by the DMRS and
a sequence corresponding to the DMRS.

A modulation symbol of all or part of the UCI is adopted to modulate the DMRS.

In the embodiment of the disclosure, a code rate corresponding to the information meets a specified threshold requirement.

In the embodiment of the disclosure, a code rate of the information on a specified symbol meets the specified threshold requirement.

In the embodiment of the disclosure, a code rate of the data information on first n symbols transmitting the data information is not higher than 0.931 or 0.93 or 1, n being less than or equal to the total number of symbols transmitting the data information.

The signal transmission method of the embodiments of the disclosure will be described below in combination with specific implementation scenarios in detail.

First embodiment

A signal transmission method of the embodiment is specifically a method for transmitting UCI on a PUSCH.

The UCI includes at least one of: a CQI and/or PMI (represented as CQI/PMI in the disclosure), a HARQ-ACK, an RI and a CRI. The HARQ-ACK is feedback information of downlink data, for example, 1bit ACK/Negative Acknowledgement (NACK). The RI may be one of: only the RI, joint reporting of the RI and i1, joint reporting of the CRI and the RI, joint reporting of the CRI, the RI and the i1, joint reporting of the CRI, the RI and a Precoding Type Indication (PTI) and joint reporting of the RI and the PTI. i1 is Wideband first PMI i1. A practical application is not limited to the information.

In the disclosure, descriptions will be made with User Equipment (UE) supporting a short TTI as an example. The method is not limited to a short TTI scenario. In the embodiment, the method for transmitting the UCI on the PUSCH and a method for transmission in a scenario where a predetermined transmission time of the UCI is overlapped with a transmission time of uplink data are considered. For example, according to a configuration cycle of an Evolved Node B (eNB), the UE is required to transmit the CQI/PMI on a time slot #n and the eNB also schedules the UE to transmit the uplink data on the time slot #n. Processing and transmission methods for such a condition are provided in the embodiment and the following embodiments.

FIG. 2-6 are multiplexing diagrams of UCI and data when a TTI includes 7, 4, 3, 2 and 1 symbol respectively. As shown in FIG. 2-6, the RI, the CQI/PMI and the data are cascaded to obtain a multiplexing sequence and then channel interleaving is performed on the multiplexing sequence and the HARQ-ACK. Punching transmission is performed on the HARQ-ACK on the multiplexing sequence and punching mapping is performed according to a sequence of columns at first and then rows. If there is no data but only the RI and the CQI/PMI, the RI and the CQI/PMI are cascaded to obtain the multiplexing sequence. If there is only the RI, the RI is determined as the multiplexing sequence. If there is only the CQI/PMI, the CQI/PMI is determined as the multiplexing sequence. If there is only the data, the data is determined as the multiplexing sequence.

Alternatively, when the RI, the CQI/PMI and the data are cascaded, the RI and the CQI/PMI are before the data. When the RI and the CQI/PMI are cascaded, the RI may be before the CQI/PMI and the CQI/PMI may also be before the RI. Preferably, the RI is before the CQI/PMI and then the data. Therefore, data of the RI may be prevented from being forced out by the HARQ-ACK.

Specific descriptions will be made below. There is made such a hypothesis below that there is only one transport block. The practical application is not limited to the following manner and steps.

In 1, a Resource Element (RE) number or corresponding modulation symbol number occupied by control information is calculated.

At first, the RE number or corresponding modulation symbol number occupied by the control information is required to be calculated, for example, calculated according to a conventional art. For the condition that the PUSCH has only one transport block, a modulation symbol number corresponding to bits of the HARQ-ACK, the RI or the CRI is calculated by a formula (1):

$$Q' = \min\left(\left\lceil \frac{O \cdot M_{sc}^{PUSCH-initial} \cdot N_{symb}^{PUSCH-initial} \cdot \beta_{offset}^{PUSCH}}{\sum_{r=0}^{C-1} K_r} \right\rceil, 4 \cdot M_{sc}^{PUSCH}\right) \quad (1),$$

where $O$ is a bit number corresponding to the HARQ-ACK, the RI or the CRI, $M_{sc}^{PUSCH}$ is a scheduling bandwidth for transmission of the PUSCH in a present subframe and is represented as the number of subcarriers, $N_{symb}^{PUSCH\text{-}initial}$ is a data transmission Single Carrier Frequency Division Multiple Access (SC-FDMA) symbol number corresponding to first transmission of the PUSCH, and $N_{SRS}$ is an SRS configuration and is 1 or 0. As shown in FIG. 2, a column number of an interleaving matrix is 6, C is a code block number, $K_r$ is a bit number of a code block and $\beta_{offset}^{RI}$ is an offset value configured by a higher layer.

A modulation symbol number occupied by other information may also be calculated according to the conventional art. Or, a calculation manner may also be redefined for the modulation symbol number occupied by the control information. There are no limits made in the disclosure.

In 2, the control information is coded.

There are no limits made to a coding manner in the embodiment of the disclosure.

In 3, the RI, the CQI/PMI and the data are cascaded/multiplexed.

Coding bits $\underline{q}_0^{RI}, \underline{q}_1^{RI}, \underline{q}_2^{RI}, ..., \underline{q}_{N_L Q_{RI}-1}^{RI}$ of the RI, coding bits $q_0, q_1, q_2, q_3, ..., q_{N_L \cdot Q_{CQI}}-1$ of the CQI/PMI and coding bits $f_0, f_1, f_2, f_3, ..., f_{G-1}$ of the data are cascaded to obtain a multiplexing column vector sequence $\underline{g}_0, \underline{g}_1, \underline{g}_2, \underline{g}_3, ..., \underline{g}_{H'-1}$, where $N_L$ is a layer number corresponding to the transport block, $H = (G + N_L \cdot Q_{CQI} + N_L \cdot Q_{RI})$ and $H' = H/(N_L \cdot Q_m)$, where $\underline{g}_i$, $i = 0,..., H'-1$ is a column vector of which a length is $(Q_m \cdot N_L)$ and $Q_m$ is a modulation order number.

In 4, channel interleaving is performed.

Descriptions will be made below with an example. The practical application is not limited to the following manner.

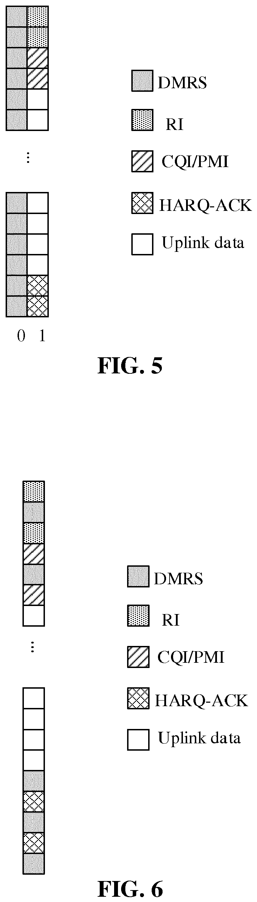

In a first step, a $R_{mux} \times C_{mux}$ interleaving matrix is established. A row number of the interleaving matrix is $R_{mux} = (H'_{total} \cdot Q_m \cdot N_L)/C_{mux}$ and $R'_{mux} = R_{mux}/(Q_m \cdot N_L)$ is defined. The column number of the interleaving matrix is $C_{mux} = N_{symb}^{PUSCH}$, where $N_{symb}^{PUSCH}$ is the number of symbols capable of transmitting the data and is determined by at least one of a length of a TTI (i.e., the number of the transmission symbols), locations of a DMRS and the SRS configuration. Each column of the interleaving matrix corresponds to a transmission symbol. Herein, if the DMRS occupies the whole symbol, the symbol transmitting the DMRS is not included. Alternatively, a symbol transmitting an SRS may also not be included. For example, in FIG. 2, the columns of the interleaving matrix sequentially correspond to symbols 0, 1, 2, 4, 5 and 6. If the DMRS and the transmitted information are multiplexed in the same symbol, for example, in FIG. 6, the symbol also corresponds to a column in the interleaving matrix and part of elements in the column are occupied by the DMRS.

In a second step, the multiplexing column vector sequence $\underline{g}_0, \underline{g}_1, \underline{g}_2, \underline{g}_3, ..., \underline{g}_{H'-1}$ is sequentially written into the interleaving matrix from a left upper corner of the interleaving matrix to a right lower corner of the interleaving matrix. During writing, each $\underline{g}_i$ is written into a row $(Q_m \cdot N_L)$ in a column and writing is executed from rows #0 to $(Q_m \cdot N_L-1)$ in a column #0. During writing, a manner of writing row by row is adopted. In the disclosure, when $(Q_m \cdot N_L) = 1$, writing row by row refers to that, after one row is completely written, a next row is continued to be written. When $(Q_m \cdot N_L) = 1$, writing row by row refers to that, after the row $(Q_m \cdot N_L)$ is completely written, the next row $(Q_m \cdot N_L)$ is continued to be written.

A writing process will be presented below with an example.

Set i, k to 0.

while k<$H'$,

$\underline{y}_j = \underline{g}_k$

k=k+1

end if
i=i+1

$$
\begin{bmatrix}
\underline{y}_0 & \underline{y}_1 & \underline{y}_2 & \cdots & \underline{y}_{C_{mux}-1} \\
\underline{y}_{C_{mux}} & \underline{y}_{C_{mux}+1} & \underline{y}_{C_{mux}+2} & \cdots & \underline{y}_{2C_{mux}-1} \\
\vdots & \vdots & \vdots & \ddots & \vdots \\
\underline{y}_{(R'_{mux}-1)\times C_{mux}} & \underline{y}_{(R'_{mux}-1)\times C_{mux}+1} & \underline{y}_{(R'_{mux}-1)\times C_{mux}+2} & \cdots & \underline{y}_{(R'_{mux}\times C_{mux}-1)}
\end{bmatrix}.
$$

end while, where

Alternatively, the multiplexing sequence may also be written into the interleaving matrix in a manner of writing column by column. That is, after a first column is completely written, a second column is written.

Alternatively, for the condition that the DMRS and the transmitted information are multiplexed in the same symbol, locations corresponding to the DMRS should be skipped during writing.

In a third step, if there is HARQ-ACK information required to be sent, a HARQ-ACK vector sequence is written upwards from a last row of the interleaving matrix, namely from the last row ($Q_m \cdot N_L$). If there is still data after the row ($Q_m \cdot N_L$) is completely written, the data is written into an adjacent previous row ($Q_m \cdot N_L$), and so on.

Alternatively, for the condition that the DMRS and the transmitted information are multiplexed in the same symbol, the locations corresponding to the DMRS should be skipped during writing. Preferably, if other information has been written into corresponding locations when the HARQ-ACK information is written, the written information is covered and replaced with the HARQ-ACK information.

In 5, after the interleaving matrix is completely written according to the abovementioned manners, a bit stream $h_0, h_1, h_2, ..., h_{H-1}$ is read out column by column.

Alternatively, if there is independent CRI information, the same processing manner is adopted for the CRI and the RI. In another embodiment, descriptions are made only with the RI and processing for the CRI is similar.

Alternatively, the HARQ-ACK may be written into all of columns in written rows. There is made such a hypothesis that a length of the TTI is four symbols, i.e., symbols #0, 1, 2 and 3 according to a time sequence respectively and the DMRS is on the symbol #1 and occupies the whole symbol. If each of the symbols is not a last symbol on an SRS subframe, the column number of the interleaving matrix is 3, corresponding to the symbols #0, 2 and 3 respectively, the HARQ-ACK is written into all of the columns, namely transmitted on the symbols #0, 2 and 3, or is only written into part of the columns and, for example, is only transmitted on symbols on two sides or one side of the DMRS. For example, it is only transmitted on the symbols #0 and 2 or is only transmitted on the symbol #0. Or, it is written into first n columns or last n columns, n being preset or notified by the eNB.

Alternatively, when being written into a column, the HARQ-ACK is written according to a preset sequence, for example, a numbering sequence of the columns. There is made such a hypothesis that the length of the TTI is four symbols, i.e., the symbols #0, 1, 2 and 3 according to the time sequence respectively, and the DMRS is on the symbol #1 and occupies the whole symbol. If each of the symbols is not the last symbol on the SRS subframe, the column number of the interleaving matrix is 3, corresponding to the symbols #0, 2 and 3 respectively. A sequence according to which the HARQ-ACK is written into a row is the symbols #0, 2 and 3, or a sequence gradually from a symbol adjacent to the symbol of the DMRS to two sides, for example, the symbol #2 at first, then the symbol #1 and finally the symbol #3, or a sequence determined according to a defined pseudo-random code, for example, #0, then the symbol #3 and finally the symbol #2.

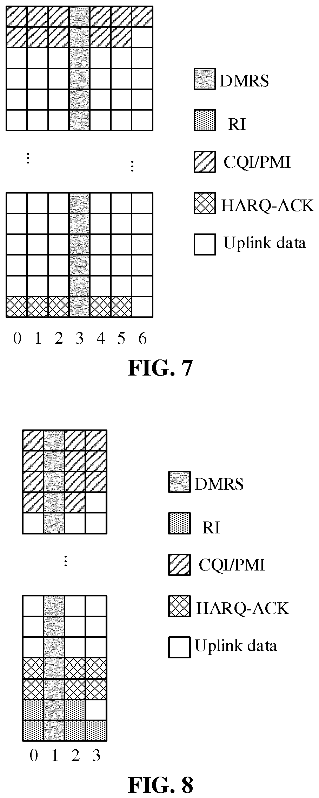

Alternatively, when there is only CQI/PMI information required to be reported and RI information is not required to be reported, the CQI/PMI and the data are cascaded, as shown in FIG. 7.

Alternatively, when there are two transport blocks, the control information may be transmitted on both of the two transport blocks and may also be transmitted on only one transport block, and part of the control information may be transmitted on the two transport blocks and the other part of the control information is transmitted on one transport block. During transmission on one transport block in multiple layers, the control information may be transmitted in the multiple layers and may also be transmitted in only part of the layers. Descriptions of this paragraph are also applicable to the other embodiments.

Alternatively, scrambling, modulation, layer mapping, precoding, resource mapping and SC-FDMA symbol generation are performed on the read-out bit stream $h_0, h_1, h_2, ..., h_{H-1}$ for sending.


Second embodiment


A signal transmission method of the embodiment is specifically a method for transmitting UCI on a PUSCH.

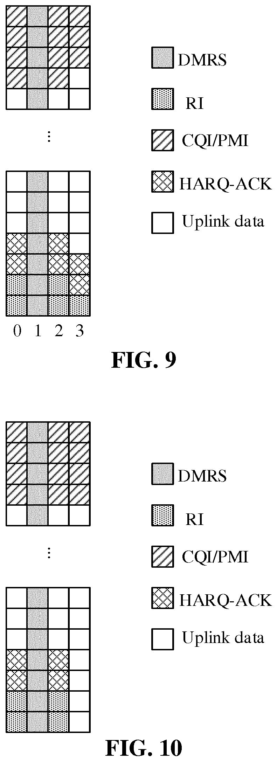

Information in the UCI is as described in the first embodiment. In the embodiment, a multiplexing manner for the UCI and data is shown in FIG. 8 and FIG. 9. A CQI/PMI and the data are cascaded or multiplexed to generate a multiplexing sequence for writing into an interleaving matrix. A form of the interleaving matrix is similar to the first embodiment. Then channel interleaving with a HARQ-ACK and/or an RI is performed. When there is no data, the CQI/PMI is determined as the multiplexing sequence. If there is only the data, the data is determined as the multiplexing sequence.

In FIG. 8, HARQ-ACK information is written through punching from a previous row of a row where the RI is located in the interleaving matrix. In FIG. 9, punching writing is performed on the HARQ-ACK information from an unwritten location in the row where the RI is located in the interleaving matrix.

Alternatively, the HARQ-ACK information may be written into a specified row in the interleaving matrix. The specified row is preset or notified by an eNB. For example, it is written into a central row of the interleaving matrix. A practical application is not limited to this example.

Alternatively, the RI and/or the HARQ-ACK information may be written into all of columns in the interleaving matrix, or may also be written into part of the columns in the interleaving matrix, for example, written into columns corresponding to two sides or one side of a DMRS symbol, as shown in FIG. 10. Or, they may also be written into a first column. There are no limits made in the embodiment.

Alternatively, when being written into a column, the HARQ-ACK or the RI is written according to a preset sequence, for example, a numbering sequence of the columns. There is made such a hypothesis that a length of a TTI is four symbols, i.e., the symbols #0, 1, 2 and 3 according to a time sequence respectively, and the DMRS is on the symbol #1 and occupies the whole symbol. If each of the symbols is not a last symbol on an SRS subframe, a column number of the interleaving matrix is 3, corresponding to the symbols #0, 2 and 3 respectively. A sequence according to which the HARQ-ACK or the RI is written into a row is the symbols #0, 2 and 3, or a sequence gradually from a symbol adjacent to the symbol of the DMRS to two sides, for example, the symbol #2 at first, then the symbol #1 and finally the symbol #3, or a sequence determined according to a defined pseudo-random code, for example, #0, then the symbol #3 and finally the symbol #2.

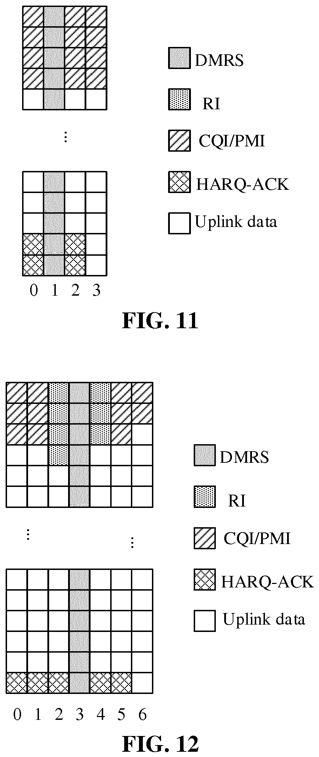

Alternatively, if there is no RI, the HARQ-ACK is written from a last row of the interleaving matrix and a multiplexing manner is shown in FIG. 11.

A processing process will be presented below with an example.

At first, coding bits $q_0,q_1,q_2,q_3,...,q_{N_L \cdot Q_{CQI}-1}$ of the CQI/PMI and coding bits $f_0,f_1,f_2,f_3,...,f_{G-1}$ of the data are cascaded to obtain a multiplexing column vector sequence $\underline{g_0},\underline{g_1},\underline{g_2},\underline{g_3},...,\underline{g}_{H'-1}$, where $H = (G+N_L \cdot Q_{CQI})$ and $H' = H/(N_L/(N_L \cdot Q_m))$, where $\underline{g_i}$, $i = 0,..., H'-1$ is a column vector of which a length is $(Q_m \cdot N_L)$.

Channel interleaving is performed below. Descriptions will be made below with an example. The practical application is not limited to the following manner.

In a first step, a $R_{mux} \times C_{mux}$ interleaving matrix is established. A column number of the matrix is

$$C_{mux} = N_{\text{symb}}^{\text{PUSCH}}$$, a row number of the interleaving matrix is $$R_{mux} = \left(H'_{total} \cdot Q_m \cdot N_L\right)/C_{mux}$$ and

$$R'_{mux} = R_{mux}/\left(Q_m \cdot N_L\right)$$ is defined. Columns of the interleaving matrix correspond to transmission symbols.

In a second step, if there is RI information required to be sent, an RI vector sequence is written row by row upwards from the last row of the interleaving matrix, namely from a last row $(Q_m \cdot N_L)$. If there is still data after the row $(Q_m \cdot N_L)$ is completely written, the data is written into an adjacent previous row $(Q_m \cdot N_L)$, and so on. Alternatively, for the condition that the DMRS and the transmitted information are multiplexed in the same symbol, locations corresponding to the DMRS should be skipped during writing.

In a third step, the multiplexing column vector sequence $\underline{g_0},\underline{g_1},\underline{g_2},\underline{g_3},...,\underline{g}_{H'-1}$ is sequentially written into the interleaving matrix row by row from a left upper corner of the interleaving matrix, namely from rows #0 to $(Q_m \cdot N_L-1)$ in a column #0, to a right lower corner of the interleaving matrix. Written elements, i.e., elements corresponding to the RI, in the interleaving matrix are skipped.

Alternatively, for the condition that the DMRS and the transmitted information are multiplexed in the same symbol, the locations corresponding to the DMRS should also be skipped during writing.

In a fourth step, if there is HARQ-ACK information required to be sent, a HARQ-ACK vector sequence is written from a previous row of an ending row corresponding to the RI, namely from a previous row $(Q_m \cdot N_L)$ of the ending row corresponding to the RI. If there is still data after the row $(Q_m \cdot N_L)$ is completely written, the data is written into the adjacent previous row $(Q_m \cdot N_L)$, and so on. Alternatively, for the condition that the DMRS and the transmitted information are multiplexed in the same symbol, the locations corresponding to the DMRS should be skipped during writing.

After the interleaving matrix is completely written according to the abovementioned manner, a bit stream $h_0,h_1,h_2,...,h_{H+N_L \cdot Q_{RI}-1}$ is read out by the column.

Alternatively, the HARQ-ACK or the RI may be written into all of columns in only one row and may also be written into only part of the columns, for example, columns corresponding to symbols on the two sides of the DMRS or a first column.

The other contents are similar to the first embodiment.

Third embodiment

A signal transmission method of the embodiment is specifically a method for transmitting UCI on a PUSCH.
Information in the UCI is as described in the first embodiment. In the embodiment, a multiplexing manner for the UCI and data is shown in FIG. 12. A CQI/PMI and the data are cascaded or multiplexed and then channel interleaving with a HARQ-ACK and/or an RI is performed. When there is no data, the CQI/PMI is determined as a multiplexing sequence. If there is only the data, the data is determined as the multiplexing sequence.
A processing process will be presented below.
At first, coding bits $q_0, q_1, q_2, q_3, ..., q_{N_L \cdot Q_{CQI}} - 1$ of the CQI/PMI and coding bits $f_0, f_1, f_2, f_3, ..., f_{G-1}$ of the data are cascaded to obtain a multiplexing column vector sequence $\underline{g_0}, \underline{g_1}, \underline{g_2}, \underline{g_3}, ..., \underline{g_{H'-1}}$, where $H = (G + N_L \cdot Q_{CQI})$ and $H' = H/(N_L \cdot Q_m)$, where $\underline{g_i}$, $i = 0, ..., H'-1$ is a column vector of which a length is $(Q_m \cdot N_L)$.
Channel interleaving is performed below. Descriptions will be made below with an example. The practical application is not limited to the following manner.

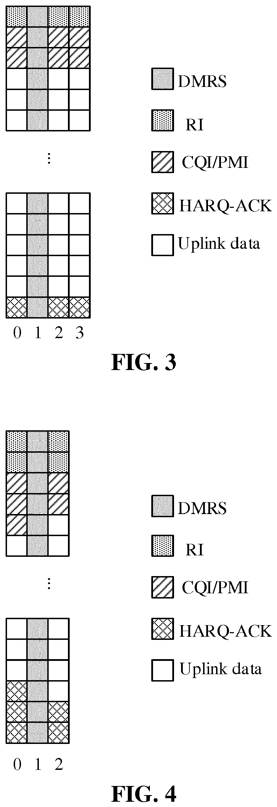

In a first step, a $R_{mux} \times C_{mux}$ interleaving matrix is established. A column number of the matrix is
$$C_{mux} = N_{\text{symb}}^{\text{PUSCH}},$$
a row number of the interleaving matrix is $R_{mux} = (H'_{total} \cdot Q_m \cdot N_L)/C_{mux}$ and $R'_{mux} = R_{mux}/(Q_m \cdot N_L)$ is defined. Columns of the interleaving matrix correspond to transmission symbols.
In a second step, if there is RI information required to be sent, an RI vector sequence is written row by row downwards from a first row of the interleaving matrix, namely from a first row $(Q_m \cdot N_L)$. If there is still data after the row $(Q_m \cdot N_L)$ is completely written, the data is written into an adjacent next row $(Q_m \cdot N_L)$, and so on. Alternatively, for the condition that a DMRS and the transmitted information are multiplexed in the same symbol, locations corresponding to the DMRS should be skipped during writing.
In a third step, the multiplexing column vector sequence $\underline{g_0}, \underline{g_1}, \underline{g_2}, \underline{g_3}, ..., \underline{g_{H'-1}}$ is sequentially written into the interleaving matrix row by row from a left upper corner of the interleaving matrix, namely from rows #0 to $(Q_m \cdot N_L - 1)$ in a column #0, to a right lower corner of the interleaving matrix. Written elements, i.e., elements corresponding to the RI, in the interleaving matrix are skipped.
Alternatively, for the condition that the DMRS and the transmitted information are multiplexed in the same symbol, the locations corresponding to the DMRS should also be skipped during writing.
In a fourth step, if there is HARQ-ACK information required to be sent, a HARQ-ACK vector sequence is written upwards from a last row of the interleaving matrix, namely from a last row $(Q_m \cdot N_L)$. If there is still data after the row $(Q_m \cdot N_L)$ is completely written, the data is written into an adjacent previous row $(Q_m \cdot N_L)$, and so on. Alternatively, for the condition that the DMRS and the transmitted information are multiplexed in the same symbol, the locations corresponding to the DMRS should be skipped during writing.
After the interleaving matrix is completely written according to the abovementioned manner, a bit stream $h_0, h_1, h_2, ..., h_{H+N_L \cdot Q_{RI}-1}$ is read out by the column.
Alternatively, the HARQ-ACK or the RI may be written into all of columns in only one row and may also be written into only part of the columns, for example, columns corresponding to symbols on two sides of the DMRS or a first column. Alternatively, the HARQ-ACK and the RI may be written into the same column and different columns.
The other contents are similar to the first embodiment.
For the length of the TTI and the locations of the DMRS in FIGS. 4, 5 and 6, the same multiplexing manner is adopted in the method in the embodiment and the method in the first embodiment.

Fourth embodiment

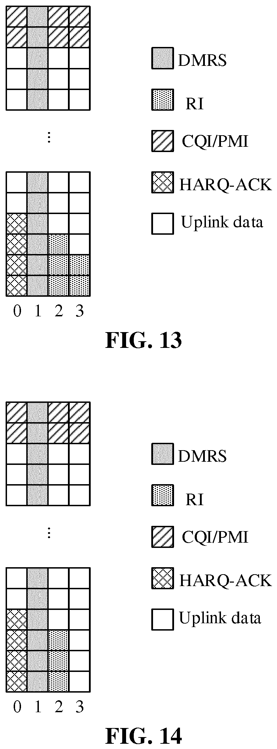

A signal transmission method of the embodiment is specifically a method for transmitting UCI on a PUSCH.
Information in the UCI is as described in the first embodiment. In the embodiment, a multiplexing manner for the UCI and data is shown in FIG. 13 and FIG. 14. A CQI/PMI and the data are cascaded or multiplexed and then channel interleaving with a HARQ-ACK and/or an RI is performed. The HARQ-ACK and the RI are located on two sides of a DMRS symbol respectively. The HARQ-ACK/RI corresponds to all symbols on one side of the DMRS or corresponds to part of the symbols on one side respectively. When there is no data, the CQI/PMI is determined as a multiplexing sequence. If there is only the data, the data is determined as the multiplexing sequence. In FIG. 13, the HARQ-ACK and the RI are transmitted on all of the symbols on one side respectively. In FIG. 14, the HARQ-ACK and the RI are transmitted on one symbol on one side respectively.

A processing process will be presented below with an example.

At first, coding bits $q_0, q_1, q_2, q_3, ..., q_{N_L \cdot Q_{CQI}-1}$ of the CQI/PMI and coding bits $f_0, f_1, f_2, f_3, ..., f_{G-1}$ of the data are cascaded to obtain a multiplexing column vector sequence $g_0, g_1, g_2, g_3, ..., g_{H'-1}$, where $H = (G + N_L \cdot Q_{CQI})$ and $H' = H/(N_L \cdot Q_m)$, where $g_i$, $i = 0,...,H'-1$ is a column vector of which a length is $(Q_m \cdot N_L)$.

Channel interleaving is performed below. Descriptions will be made below with an example. The practical application is not limited to the following manner.

In a first step, a $R_{mux} \times C_{mux}$ interleaving matrix is established. A column number of the matrix is

$$C_{mux} = N_{\text{symb}}^{\text{PUSCH}}$$

, a row number of the interleaving matrix is $R_{mux} = (H'_{total} \cdot Q_m \cdot N_L)/C_{mux}$ and

$$R'_{mux} = R_{mux}/(Q_m \cdot N_L)$$

is defined. Columns of the interleaving matrix correspond to transmission symbols.

In a second step, if there is RI information required to be sent, an RI vector sequence is written row by row upwards from the end of the interleaving matrix, namely from a first row $(Q_m \cdot N_L)$, and the RI information is written into columns corresponding to all the symbols on one side of the DMRS. If there is still data after a row $(Q_m \cdot N_L)$ is completely written, the data is written into an adjacent previous row $(Q_m \cdot N_L)$, and so on.

In a third step, the multiplexing column vector sequence $g_0, g_1, g_2, g_3, ..., g_{H'-1}$ is sequentially written into the interleaving matrix row by row from a left upper corner of the interleaving matrix, namely from rows #0 to $(Q_m \cdot N_L-1)$ in a column #0, to a right lower corner of the interleaving matrix. Written elements, i.e., elements corresponding to the RI, in the interleaving matrix are skipped.

In a fourth step, if there is HARQ-ACK information required to be sent, the HARQ-ACK information is written into columns corresponding to all symbols on the other side of the DMRS row by row upwards from a last row of the interleaving matrix, namely from a last row $(Q_m \cdot N_L)$. If there is still data after the row $(Q_m \cdot N_L)$ is completely written, the data is written into the adjacent previous row $(Q_m \cdot N_L)$, and so on.

After the interleaving matrix is completely written according to the abovementioned manner, a bit stream $h_0, h_1, h_2, ..., h_{H+N_L \cdot Q_{RI}-1}$ is read out by the column.

Alternatively, for the condition that the DMRS and the transmitted information are multiplexed in the same symbol, the RI may be written into a column corresponding to the DMRS, the HARQ-ACK may also be written and locations corresponding to the DMRS should be skipped during writing.

Alternatively, the HARQ-ACK or the RI may be written into all of columns in only one row and may also be written into only part of the columns, for example, x columns adjacent to one side of the DMRS, x being a positive integer, or the column corresponding to the DMRS and y columns adjacent to one side of the DMRS, y being a nonnegative integer. The latter is adopted for the condition that the DMRS and the transmitted information are multiplexed in the same symbol. Or, the HARQ-ACK is in first n columns and the RI is in last n columns, n being a positive integer. Or, the two may also be transposed. The practical application is not limited to the example given above.

Alternatively, the HARQ-ACK and the RI may correspond to different or the same column number.

The other contents are similar to the first embodiment.

Fifth embodiment

A signal transmission method of the embodiment is specifically a method for transmitting UCI on a PUSCH.

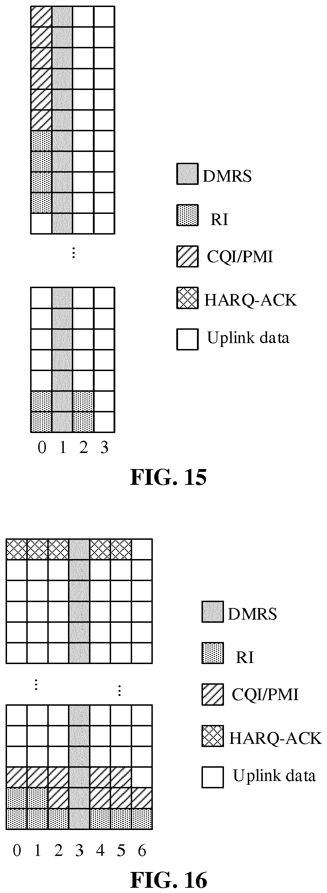

Information in the UCI is as described in the first embodiment. In the embodiment, a multiplexing manner for the UCI and data is shown in FIG. 15. It can be seen that an RI and a CQI/PMI are transmitted on a first symbol.

A channel interleaving process will be presented below with an example. Descriptions will be made below with an example. The practical application is not limited to the following manner. If there is data, the data is determined as a multiplexing sequence. In a first step, a $R_{mux} \times C_{mux}$ interleaving matrix is established. A column number of the matrix is $C_{mux} = N_{\text{symb}}^{\text{PUSCH}}$, $N_{\text{symb}}^{\text{PUSCH}} = (2 \cdot (N_{\text{symb}}^{\text{UL}} - 1) - N_{SRS})$, a row number of the interleaving matrix is

$R_{mux} = (H'_{total} \cdot Q_m \cdot N_L)/C_{mux}$ and $R'_{mux} = R_{mux}/(Q_m \cdot N_L)$ is defined. Columns of the interleaving matrix correspond to transmission symbols.

In a second step, if there is RI information required to be sent, an RI vector sequence is written downwards from a first column of the interleaving matrix. After the first column is completely written, a next column is continued to be written, and so on. Alternatively, for the condition that a DMRS and the transmitted information are multiplexed in the same symbol, locations corresponding to the DMRS should be skipped during writing.

In a third step, if there is CQI/PMI information required to be sent, an RI vector sequence is written from a next location of the end of the RI information, and after the first column is completely written, the next column is continued to be written, and so on. Alternatively, for the condition that the DMRS and the transmitted information are multiplexed in the same symbol, the locations corresponding to the DMRS should be skipped during writing.

In a fourth step, if there is data required to be transmitted, a data sequence $g_0, g_1, g_2, g_3, ...., g_{H'-1}$ is sequentially written into the interleaving matrix from a left upper corner of the interleaving matrix to a right lower corner of the interleaving matrix. Written elements, i.e., elements corresponding to the RI and the CQI/PMI, in the interleaving matrix are skipped.

Alternatively, for the condition that the DMRS and the transmitted information are multiplexed in the same symbol, the locations corresponding to the DMRS should be skipped during writing.

In a fifth step, if there is HARQ-ACK information required to be sent, a HARQ-ACK vector sequence is written upwards from the last row of the interleaving matrix, namely from the last row ($Q_m \cdot N_L$). If there is still data after the row ($Q_m \cdot N_L$) is completely written, the data is written into an adjacent previous row ($Q_m \cdot N_L$), and so on. Alternatively, for the condition that the DMRS and the transmitted information are multiplexed in the same symbol, the locations corresponding to the DMRS should be skipped during writing.

After the interleaving matrix is completely written according to the abovementioned manner, a bit stream is read out by the column.

The second step and the third step may also be exchanged. If only one of the RI and the CQI/PMI is required to be reported, information required to be reported is written from the left upper corner.

Alternatively, the HARQ-ACK sequence may be written into all of the columns and may also be written into part of the columns, for example, columns corresponding to symbols on two sides or one side of a symbol of the DMRS or the first column.

The method in the embodiment is favorable for an eNB to obtain the CQI/PMI and RI information earlier and for the eNB to schedule downlink of UE earlier.

The other contents are similar to the first embodiment.

Sixth embodiment

A signal transmission method of the embodiment is specifically a method for transmitting UCI on a PUSCH.

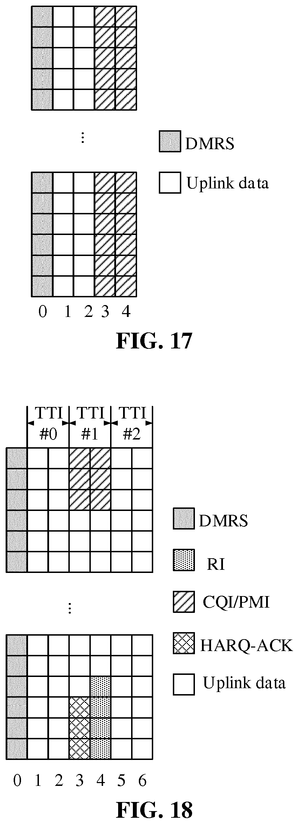

Referring to FIG. 18, a HARQ-ACK and an RI are mapped on specified symbols respectively. As shown in FIG. 18, DMRSs of three TTIs are sent on a first symbol. On a TTI#1, a CQI/PMI and data are cascaded and written into an interleaving matrix, the HARQ is sent on a first symbol of the TTI and the RI is sent on a second symbol of the TTI. A specific process is as follows: the interleaving matrix is established, the RI is written into the interleaving matrix at first, a multiplexing sequence obtained by cascading the CQI/PMI and the data is written into the interleaving matrix according to a sequence of columns at first and then rows or rows at first and then columns, locations of the RI are skipped and then punching transmission is performed on the HARQ-ACK upwards from a last row.

In the method of the embodiment, the symbol corresponding to the HARQ-ACK is a symbol relatively close to the DMRS and the symbol corresponding to the RI is a symbol adjacent to the symbol where the HARQ-ACK is located.

Seventh embodiment

In all the embodiments of the disclosure, when being written into an interleaving matrix, a multiplexing sequence may be written row by row and may also be written column by column. Other writing operations are also similar, may write row by row and may also write column by column. During writing row by row, a sequence of writing into a row is preset. For example, if there are four columns, i.e., columns 0, 1, 2 and 3 respectively, a sequence of 0, 1, 2 and 3 or 0, 3, 2 and 1 may be adopted. During writing column by column, a sequence of writing into a column is preset, as described above.

In the abovementioned embodiments, when the interleaving matrix is written, multiplexing or interleaving locations may also be exchanged. For example, for FIG. 2 of the first embodiment, FIG. 16 and FIG. 2 illustrate manners of sending upwards and downwards.

In the third embodiment, if there is HARQ-ACK information required to be sent, a HARQ-ACK vector sequence is written upwards from a last row of the interleaving matrix, namely from a last row ($Q_m \cdot N_L$). If there is still data after the row ($Q_m \cdot N_L$) is completely written, the data is written into an adjacent previous row ($Q_m \cdot N_L$), and so on. Herein, when the HARQ-ACK is written, a sequence of columns at first and then rows may be adopted, and a next column may be written after one column is completely written according to a preset sequence. Or, after a preset location in a column is completely written, a next column may be started to be written. For example, writing may be started from a column corresponding to a symbol on a left side of a DMRS in the last row of the interleaving matrix and, after last N elements in the column are completely written, a next column may be started to be written, and so on, N being a preset value. The same to other UCI.

In the abovementioned embodiments, it is mentioned that some UCI may occupy part of columns or all of the columns of the interleaving matrix. Part of columns may refer to one of:

> columns corresponding to A symbols adjacent to two sides of a symbol where the DMRS is located, wherein A is a positive integer, the two sides may correspond to the same or different symbol numbers and, for example, there is one symbol on the left side of the symbol of the DMRS and one symbol on the right side of the symbol of the DMRS, or, there is one symbol on the left side of the symbol of the DMRS and two symbols on the right side of the symbol of the DMRS;
> a column corresponding to the symbol where the DMRS is located and columns corresponding to B symbols adjacent to the two sides of the symbol where the DMRS is located, B being a nonnegative integer;
> columns corresponding to C symbols adjacent to one side of the symbol where the DMRS is located, C being a positive integer;
> the column corresponding to the symbol where the DMRS is located and columns corresponding to D symbols adjacent to one side of the symbol where the DMRS is located, D being a nonnegative integer;
> first E columns, E being a positive integer less than or equal to N;
> last F columns, F being a positive integer less than or equal to N; and
> preset columns.

Adjacency refers to physical adjacency or logical adjacency.

The DMRS may be all of DMRSs in the TTI and may also be part of the DMRSs.

For example, as shown in FIG. 2, the HARQ-ACK may be transmitted on symbols #1, 2, 4 and 5, or transmitted on the symbols #1 and 2, or transmitted on #2 and 4 or transmitted on the symbol #2.

Alternatively, adjacency may refer to physical adjacency and may also refer to logical adjacency. For example, as shown in FIG. 17, a TTI includes three symbols, the first two symbols are not physically adjacent, a DMRS is sent on the symbol #0, the DMRS is spaced from information by two symbols, that is, the information is sent on the symbols #3 and 4, and then a symbol adjacent to the DMRS is the symbol #3.

Alternatively, for the first to sixth embodiments, locations of the RI may be shown in the first to sixth embodiments and punching transmission may be performed on the RI for the multiplexing sequence.

Alternatively, a transmission manner for the UCI on the PUSCH may be indicated in an uplink grant corresponding to the PUSCH and, for example, is indicated to be rate matching or punching transmission with 1 bit. For another example, the specific transmission manner is indicated with a few bits, and the transmission manner is one of the first, second, third, fourth and fifth embodiments. The practical application is not limited to the above examples. Alternatively, the transmission manner may also be notified through RRC signaling or a SIB, or, the transmission manner may also be preset.

Eighth embodiment

In the embodiment, some UCI contents are contained through a DMRS or data, so as to save mapping resources and improve data transmission reliability.

Alternatively, the DMRS occupies part of subcarriers on a symbol and HARQ-ACK information is indicated by use of different RE locations occupied by the DMRS. For example, when the DMRS occupies an odd number of subcarriers, an ACK is indicated, and when the DMRS occupies an even number of subcarriers, a NACK is indicated or there is no HARQ-ACK information required to be sent.

Alternatively, the DMRS occupies different symbols to indicate HARQ ACK/NACK information. For example, when a TTI includes two symbols, if the DRMS is sent on the first symbol, the ACK is indicated, and when the DMRS is sent on the second symbol, the NACK is indicated or there is no HARQ-ACK information required to be sent.

Alternatively, multiple DMRS sequences are configured for the DMRS of UE and the HARQ-ACK information is indicated by use of the DMRS sequences. For example, when the sequence 1 is used for the DMRS, the ACK is indicated, and when the sequence 2 is used for the DMRS, the NACK is indicated or there is no HARQ-ACK information required to be sent.

Alternatively, a HARQ-ACK modulation symbol is adopted to modulate the DMRS.

Alternatively, when a combination of the abovementioned manners is adopted, a larger bit number is indicated.

Descriptions are made above with the HARQ-ACK as an example and are also applicable to other UCI, for example, an RI.

Alternatively, when Quadrature Phase Shift Keying (QPSK) is adopted to modulate data, the UCI may be indicated in different modulation manners. For example, if existing QPSK is adopted, the ACK is indicated, and if 90-degree rotating QPSK is adopted, the NACK is indicated or there is no HARQ-ACK information required to be sent.

Ninth embodiment

In the embodiment, a solution for the condition that a predetermined transmission time of UCI is overlapped with a transmission time of uplink data is provided.

In the abovementioned embodiments, a method for sending the UCI on a PUSCH is provided. In the embodiment, another solution is provided. That is, the UCI is deferred to be transmitted or aborted to be transmitted, and is namely transmitted on a certain TTI after the TTI, for example, transmitted on a next TTI, or transmitted on a subsequent TTI without the PUSCH.

For example, a CQI/PMI or an RI/CRI may be deferred to be transmitted on a next TTI or aborted to be transmitted and then transmitted on a next reporting cycle. A HARQ-ACK may be transmitted on the PUSCH and a transmission manner is similar to the abovementioned embodiments. Therefore, there are more resources for data transmission.

For another example, the CQI/PMI is deferred or aborted to be transmitted, the RI and the HARQ-ACK may be transmitted on the PUSCH and a transmission manner is similar to the abovementioned embodiments.

The practical application is not limited to the above examples.

Alternatively, a processing manner is indicated in an uplink grant corresponding to the PUSCH. For example, abortion of transmission or transmission on the PUSCH is indicated with 1bit. The 1bit is adopted to indicate all of the UCI or may also be adopted to indicate part of the UCI. Or, each type of UCI is indicated with 1bit. Or, the UCI is notified in RRC signaling or a SIB.

Alternatively, the processing manner may be determined according to the UCI required to be simultaneously transmitted. For example, when the CQI/PMI/RI and the HARQ-ACK are required to be simultaneously reported, the CQI/PMI is aborted and, if there is only the CQI/PMI/RI, the CQI/PMI/RI is transmitted on the PUSCH.

Tenth embodiment

If transmission of HARQ-ACK information of multiple transport blocks with different TTI lengths and a PUSCH correspond to the same TTI, for example, HARQ-ACK information of a transport block of which a TTI length is two symbols and HARQ-ACK information of a transport block of which a TTI length is 1ms are required to be transmitted on a TTI #n and the PUSCH is also required to be transmitted on the TTI#n, multiple HARQ-ACKs may Alternatively be respectively coded for transmission on the PUSCH or jointly coded for transmission on the PUSCH.

Alternatively, only part of the HARQ-ACK information may be transmitted on the PUSCH and the other HARQ-ACK information is aborted to be transmitted or deferred to be transmitted. Preferably, only the HARQ-ACK information of one or more transport blocks with a minimum TTI length may be transmitted on the PUSCH. A transmission manner is as described in the other embodiments.

Eleventh embodiment

A processing method for the condition that a predetermined transmission time of an SRS is overlapped with a transmission time of data information is provided in the embodiment.

A solution provided in the embodiment is as follows: no DMRS is transmitted at locations corresponding to all or part of DMRSs and data is sent at the locations.

If a transmission time length of the data information is two symbols, the first symbol is configured to transmit a DMRS and the second symbol is configured to transmit the data. When the SRS is required to be transmitted on the second symbol of the transmission time, there is only the DMRS and the SRS transmitted on a corresponding TTI.

For avoiding such meaningless transmission, no DMRS may be sent in a subframe where UE is required to send the SRS, the data is sent on the symbol originally sending the DMRS and the SRS is adopted for data demodulation as a reference signal. Alternatively, there may be some limits to scheduling of an eNB and the user data should be within a bandwidth range of the SRS.

When the transmission time length is three or four symbols, a similar manner may also be adopted and the SRS is adopted as the reference to reduce a pilot overhead. Or, when two symbols are adopted for the DMRS, only the DMRS on one symbol may be transmitted.

Alternatively, when a frequency-domain resource of the PUSCH scheduled by the eNB and a transmission bandwidth of the SRS of the UE are not overlapped or only partially overlapped, the UE aborts transmission of the SRS, or, the SRS aborts sending of the PUSCH.

Twelfth embodiment

In the abovementioned embodiments, a method for transmitting UCI and uplink data on a PUSCH and a method for transmitting uplink data on the PUSCH are provided.

In the embodiment, a transmission code rate requirement is made.

Alternatively, a code rate of a transmitted content meets a specified threshold requirement. For example, a code rate of the uplink data is not higher than 0.931 or 0.93 or 1.

Alternatively, a code rate of the uplink data on a specified symbol meets the specified threshold requirement. Herein, the specified symbol may refer to a certain symbol and may also refer to some symbols. For example, a code rate of the uplink data on a first symbol transmitting the uplink data is not higher than 0.931 or 0.93 or 1, or a code rate on each symbol transmitting the uplink data is not higher than 0.931 or 0.93 or 1, or a code rate on every two symbols is not higher than 0.931 or 0.93 or 1. The practical application is not limited to the above examples. For example, a code rate on a symbol transmitting the uplink data is obtained by calculating a transmission resource through the following formula: (TBS+24)/(Qm $\times$ S), Transport Block Size (TBS) being a transport block size of the data, Qm being a modulation order number and S being the transmission resource on the symbol transmitting the uplink data. A code rate on two symbols is (TBS+24)/(Qm$\times$S1), S1 being an RE number on the two symbols.

Alternatively, a code rate of the uplink data on first n symbols transmitting the uplink data meets the specified threshold requirement, n being less than or equal to a symbol number corresponding to PUSCH transmission. For example, a code rate on the first n symbols may be calculated through the following formula: (TBS+24)/(Qm $\times$ S1), S1 being an RE number on the first n symbols. For example, if the PUSCH has totally four transmission symbols, the first symbol transmits a DMRS and the last three symbols are symbols transmitting the uplink data, a code rate of the uplink data on the second and third symbols is not higher than 0.931 or 0.93 or 1.

Thirteenth embodiment

A signal transmission method of the embodiment is specifically a method for transmitting UCI on a PUSCH.

In the embodiment, when data information is required to be reported, the data information is determined as a multiplexing sequence, otherwise there is no multiplexing sequence.

An interleaving matrix is established and, when a CQI/PMI is also required to be reported, the CQI/PMI is written into the interleaving matrix downwards from a first row of the interleaving matrix, the CQI/PMI being written into part of columns or all of the columns and, for example, written into all of the columns row by row from the first row.

When an RI/CRI is required to be reported, the RI/CRI is written into the interleaving matrix upwards from a last row of the interleaving matrix and may be written according to the manner of the second embodiment.

Locations corresponding to at least one of the RI/CRI and the CQI/PMI are skipped and the multiplexing sequence is written into the interleaving matrix according to a sequence of rows at first and then columns. That is, after a column is completely written, a next column is written. If there is no multiplexing sequence, the multiplexing sequence is not written.

When a HARQ-ACK is also required to be reported, the HARQ-ACK may be written upwards from the last row or written according to the manner of the second embodiment.

Or, a column the HARQ-ACK is written into refers to x columns corresponding to x symbols adjacent to two sides of a symbol where a DMRS is located and a column the RI/CRI is written into refers to y columns corresponding to y symbols adjacent to the column the HARQ-ACK is written into.

The column the RI/CRI is written into refers to the x columns corresponding to the x symbols adjacent to the two sides of the symbol where the DMRS is located and the column the HARQ-ACK is written into refers to y columns corresponding to y symbols adjacent to the column the RI/CRI is written into.

The column the HARQ-ACK is written into refers to a column corresponding to the symbol where the DMRS is located and the x columns corresponding to the x symbols adjacent to the two sides of the symbol where the DMRS is located and the column the RI/CRI is written into refers to the y columns corresponding to the y symbols adjacent to the column the HARQ-ACK is written into.

The column the RI/CRI is written into refers to the column corresponding to the symbol where the DMRS is located and the x columns corresponding to the x symbols adjacent to the two sides of the symbol where the DMRS is located and the column the HARQ-ACK is written into refers to the y columns corresponding to the y symbols adjacent to the column the RI/CRI is written into.

X and y are positive integers.

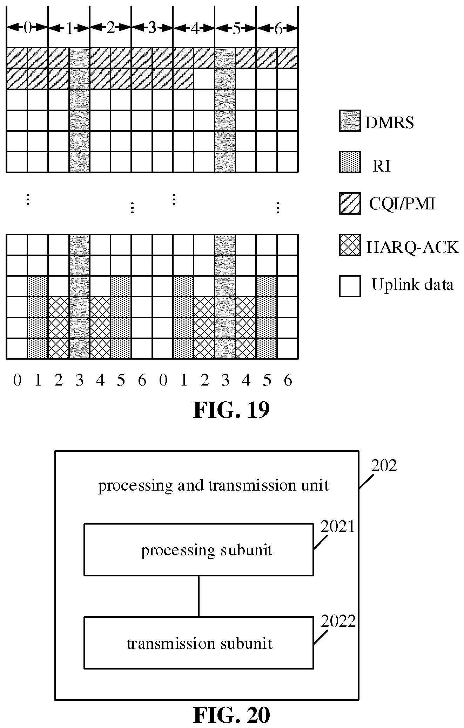

The obtained interleaving matrix is read out column by column to complete multiplexing and interleaving processing. Referring to FIG. 19, FIG. 19 is an example diagram of the interleaving matrix.

Thirteenth embodiment

A signal transmission method of the embodiment is specifically a method for transmitting UCI on a PUSCH.

The embodiment is similar to the first embodiment. The difference is that a sequence of information in a multiplexing sequence is different and locations a HARQ-ACK is written into are different.

When a first content is required to be reported, the multiplexing sequence is generated according to the first content, the first content being at least one of the following contents: an RI/CRI, a CQI/PMI and data information.

An interleaving matrix is established and the multiplexing sequence is written into the interleaving matrix.

When the HARQ-ACK is also required to be reported, the HARQ-ACK is written into the interleaving matrix downwards from a first row of the interleaving matrix, the HARQ-ACK being written into part of columns or all of the columns.

The obtained interleaving matrix is read out column by column to complete multiplexing and interleaving processing.

When the first content required to be reported includes the RI/CRI and does not include the CQI/PMI and the data information, the RI/CRI is determined as the multiplexing sequence.

When the first content required to be reported includes the CQI/PMI and does not include the RI/CRI and the data information, the CQI/PMI is determined as the multiplexing sequence.

When the first content required to be reported includes the data information and does not include the CQI/PMI and the RI/CRI, the data information is determined as the multiplexing sequence.

When the first content required to be reported includes at least two of the RI/CRI, the CQI/PMI and the data information, the at least two of the RI/CRI, the CQI/PMI and the data information are cascaded to obtain the multiplexing sequence.

The operation that the at least two of the RI/CRI, the CQI/PMI and the data information are cascaded to obtain the multiplexing sequence when the first content required to be reported includes the at least two of the RI/CRI, the CQI/PMI and the data information includes at least one of the following operations.

When the UCI and the data information are required to be reported, cascading is performed in a manner that the data information is before the UCI to obtain the multiplexing sequence.

When the RI/CRI and the CQI/PMI are required to be reported, cascading is performed in a manner that the CQI/PMI is before the RI/CRI to obtain the multiplexing sequence.

In the abovementioned two methods, all writing may be executed in a manner of rows at first and then columns or columns at first and then rows. A definition about part of the columns similar to the abovementioned embodiments.

By such processing, the HARQ-ACK is located at an upper part of the interleaving matrix and the CQI/PMI and the RI are located at a lower part of the interleaving matrix, as shown in FIG. 21.

Fourteenth embodiment

A signal transmission method of the embodiment is specifically a method for transmitting UCI on a PUSCH.

A first manner

The interleaving matrix is established and, when the RI/CRI is required to be reported, the RI/CRI is written into the interleaving matrix downwards from the first row of the interleaving matrix, the RI/CRI being written into part of the columns or all of the columns.

When a CQI/PMI is also required to be reported, the CQI/PMI is written into the interleaving matrix downwards from a specified row, the CQI/PMI being written into part of the columns or all of the columns.

When data is also required to be sent, locations corresponding to at least one of the RI/CRI and the CQI/PMI are skipped and the data is written into the interleaving matrix.

When a HARQ-ACK is also required to be reported, the HARQ-ACK is written into the interleaving matrix upwards from a last row of the interleaving matrix.

The obtained interleaving matrix is read out column by column to complete multiplexing and interleaving processing.

The specified row is the first row, or an ending row of the written RI/CRI or a next row of the ending row of the written RI/CRI.

A second manner

The second manner is similar to the first manner. Writing locations are slightly different, as described below.

The interleaving matrix is established and, when the RI/CRI is required to be reported, the RI/CRI is written into the interleaving matrix upwards from the last row of the interleaving matrix, the RI/CRI being written into part of the columns or all of the columns.

When the CQI/PMI is also required to be reported, the CQI/PMI is written into the interleaving matrix upwards from the specified row, the CQI/PMI being written into part of the columns or all of the columns.

When the data is also required to be sent, the locations corresponding to at least one of the RI/CRI and the CQI/PMI are skipped and the data is written into the interleaving matrix.

When the HARQ-ACK is also required to be reported, the HARQ-ACK is written into the interleaving matrix downwards from the first row of the interleaving matrix.

The obtained interleaving matrix is read out column by column to complete multiplexing and interleaving processing.

The specified row is the last row, or the ending row of the written RI/CRI or a previous row of the ending row of the written RI/CRI.

In the abovementioned two methods, all writing may be executed in the manner of rows at first and then columns or columns at first and then rows. The definition about part of the columns similar to the abovementioned embodiments.

The RI/CRI and the HARQ-ACK may be written into the same column, may also be written into different columns or may be partially written into the same column.

FIG. 20 is a structure composition schematic diagram of a signal transmission device according to an embodiment of the disclosure. As shown in FIG. 20, the device includes a processing and transmission unit 202.

The processing and transmission unit 202 is configured to, when at least one of UCI and/or data information is required to be transmitted on a PUSCH, process and transmit a target content according to at least one of a preset operation and a notification message of a base station; or,

the processing and transmission unit 202 is configured to, when a predetermined transmission time of the UCI or an SRS is overlapped with a transmission time of the data information, process and transmit the target content according to at least one of the preset operation and the notification message of the base station.

In the embodiment of the disclosure, the UCI includes at least one of:

a CQI/PMI, a HARQ-ACK, an RI and a CRI.

The processing and transmission unit 202 includes a processing subunit 2021 and a transmission subunit 2022.

The processing subunit 2021 is configured to perform multiplexing and interleaving processing on at least one of the UCI to be reported and the data information in a specified manner or perform multiplexing and interleaving processing on the UCI to be reported.

The transmission subunit 2022 is configured to bear the processed information on the PUSCH for transmission.

In the embodiment of the disclosure, the processing subunit 2021 is further configured to, when the first content is required to be reported, generate the multiplexing sequence according to the first content, the first content being at least one of the following contents: the RI/CRI, the CQI/PMI and the data information; establish the interleaving matrix and write the multiplexing sequence into the interleaving matrix; when the HARQ-ACK is also required to be reported, write the HARQ-ACK into the interleaving matrix upwards from the last row of the interleaving matrix, the HARQ-ACK being written into part of the columns or all of the columns; and read out the obtained interleaving matrix column by column to complete multiplexing and interleaving processing.

Herein, the operation that the multiplexing sequence is generated according to the first content includes the following operations.

When the first content required to be reported includes the RI/CRI and does not include the CQI/PMI and the data information, the RI/CRI is determined as the multiplexing sequence.

When the first content required to be reported includes the CQI/PMI and does not include the RI/CRI and the data information, the CQI/PMI is determined as the multiplexing sequence.

When the first content required to be reported includes the data information and does not include the CQI/PMI and the RI/CRI, the data information is determined as the multiplexing sequence.

When the first content required to be reported includes at least two of the RI/CRI, the CQI/PMI and the data information, the at least two of the RI/CRI, the CQI/PMI and the data information are cascaded to obtain the multiplexing sequence.

Herein, the operation that the at least two of the RI/CRI, the CQI/PMI and the data information are cascaded to obtain the multiplexing sequence when the first content required to be reported includes the at least two of the RI/CRI, the CQI/PMI and the data information includes at least one of the following operations.

When the UCI and the data information are required to be reported, cascading is performed in a manner that the UCI is before the data information to obtain the multiplexing sequence.

When the RI/CRI and the CQI/PMI are required to be reported, cascading is performed in a manner that the RI/CRI is before the CQI/PMI to obtain the multiplexing sequence.

In the embodiment of the disclosure, the processing subunit 2021 is further configured to, when the first content is required to be reported, generate the multiplexing sequence according to the first content, the first content being at least one of the following contents: the CQI/PMI and the data information; establish the interleaving matrix and, when the RI/CRI is required to be reported, write the RI/CRI into the interleaving matrix upwards from the last row of the interleaving matrix; skip locations corresponding to the RI/CRI and write the multiplexing sequence into the interleaving matrix; when the HARQ-ACK is also required to be reported, write the HARQ-ACK into the interleaving matrix upwards from a specified location of the interleaving matrix; and read out the obtained interleaving matrix column by column to complete multiplexing and interleaving processing.

In the embodiment of the disclosure, the processing subunit 2021 is further configured to, when the data information is required to be reported, determine the data information as the multiplexing sequence; establish the interleaving matrix and, when the CQI/PMI is required to be reported, write the CQI/PMI into the interleaving matrix downwards from the first row of the interleaving matrix, the CQI/PMI being written into part of the columns or all of the columns of the interleaving matrix; when the RI/CRI is required to be reported, write the RI/CRI into the interleaving matrix upwards from the last row of the interleaving matrix; skip locations corresponding to at least one of the RI/CRI and the CQI/PMI and write the multiplexing sequence into the interleaving matrix according to a sequence of rows at first and then columns; when the HARQ-ACK is also required to be reported, write the HARQ-ACK into the interleaving matrix upwards from the specified location of the interleaving matrix; and read out the obtained interleaving matrix column by column to complete multiplexing and interleaving processing.

Herein, the operation that the HARQ-ACK is written into the interleaving matrix upwards from the specified location of the interleaving matrix includes one of the following operations.

When the RI/CRI and the HARQ-ACK are required to be reported, the RI/CRI is written into the interleaving matrix upwards from the last row of the interleaving matrix, and the HARQ-ACK is written into the interleaving matrix from a previous row of the end of the RI/CRI or is written into the interleaving matrix from a non-RI/CRI location in an ending row of the RI/CRI.

When no RI/CRI but the HARQ-ACK is required to be reported, the HARQ-ACK is written into the interleaving matrix upwards from the last row of the interleaving matrix in a specified manner.

Herein, the RI/CRI or the HARQ-ACK is written into all or part of the columns of the interleaving matrix.

Herein, when the RI/CRI is required to be reported, the RI/CRI is written into a first specified column upwards from the last row of the interleaving matrix in the specified manner.

When the HARQ-ACK is required to be reported, the HARQ-ACK is written into a second specified column upwards from the last row of the interleaving matrix in the specified manner.

Herein, the first specified column and the second specified column include at least one of the following conditions.

The first specified column refers to x columns corresponding to x symbols adjacent to one side of a symbol where a DMRS is located and the second specified column refers to y columns corresponding to y symbols adjacent to the other side of the symbol where the DMRS is located.

The first specified column refers to a column corresponding to the symbol where the DMRS is located and the x columns corresponding to the x symbols adjacent to one side of the symbol where the DMRS is located and the second specified column refers to the y columns corresponding to the y symbols adjacent to the other side of the symbol where the DMRS is located.

The first specified column refers to the x columns corresponding to the x symbols adjacent to one side of the symbol where the DMRS is located and the second specified column refers to the column corresponding to the symbol where the DMRS is located and the y columns corresponding to the y symbols adjacent to the other side of the symbol where the DMRS is located.

The first specified column refers to the column corresponding to the symbol where the DMRS is located and the x columns corresponding to the x symbols adjacent to one side of the symbol where the DMRS is located and the second specified column refers to the column corresponding to the symbol where the DMRS is located and the y columns corresponding to the y symbols adjacent to the other side of the symbol where the DMRS is located.

The first specified column refers to first z1 columns of the interleaving matrix and the second specified column refers to last z2 columns of the interleaving matrix.

The first specified column refers to last z1 columns of the interleaving matrix and the second specified column refers to first z2 columns of the interleaving matrix.

The first specified column refers to a column corresponding to a symbol closest to the symbol where the DMRS is located and the second specified column refers to a column corresponding to a symbol second closest to the symbol where the DMRS is located.

X, y, z1 and z2 are positive integers.

Adjacency refers to physical adjacency or logical adjacency.

In the embodiment of the disclosure, the first specified column and the second specified column include at least one of the following conditions.

The first specified column refers to x columns corresponding to x symbols adjacent to two sides of the symbol where the DMRS is located and the second specified column refers to y columns corresponding to y symbols adjacent to the first specified column.

The second specified column refers to the x columns corresponding to the x symbols adjacent to the two sides of the symbol where the DMRS is located and the first specified column refers to y columns corresponding to y symbols adjacent to the second specified column.

The first specified column refers to the column corresponding to the symbol where the DMRS is located and the x columns corresponding to the x symbols adjacent to the two sides of the symbol where the DMRS is located and the second specified column refers to the y columns corresponding to the y symbols adjacent to the first specified column.

The second specified column refers to the column corresponding to the symbol where the DMRS is located and the x columns corresponding to the x symbols adjacent to the two sides of the symbol where the DMRS is located and the first specified column refers to the y columns corresponding to the y symbols adjacent to the second specified column.

X and y are positive integers.

Adjacency refers to physical adjacency or logical adjacency.

In the embodiment of the disclosure, the processing subunit 2021 is further configured to establish the interleaving matrix and, when the RI/CRI is required to be reported, write the RI into all of the columns or part of the columns of the interleaving matrix downwards from the first row of the interleaving matrix; when at least one of the CQI/PMI and the data information is required to be reported, cascade the at least one of the CQI/PMI and the data information according to a specified sequence to generate the multiplexing sequence, skip the locations corresponding to the RI/CRI and write the multiplexing sequence into the interleaving matrix; when the HARQ-ACK is also required to be reported, write the HARQ-ACK into the interleaving matrix upwards from the last row of the interleaving matrix, the HARQ-ACK being written into part of the columns or all of the columns; and read out the obtained interleaving matrix column by column to complete multiplexing and interleaving processing.

In the embodiment of the disclosure, the processing subunit 2021 is further configured to, when the first content is required to be reported, generate the multiplexing sequence according to the first content, the first content being at least one of the following contents: the RI/CRI, the CQI/PMI and the data information; establish the interleaving matrix and write the multiplexing sequence into the interleaving matrix; when the HARQ-ACK is also required to be reported, write the HARQ-ACK into the interleaving matrix downwards from the first row of the interleaving matrix, the HARQ-ACK being written into part of the columns or all of the columns; and read out the obtained interleaving matrix column by column to complete multiplexing and interleaving processing.

In the embodiment of the disclosure, the processing subunit 2021 is further configured to establish the interleaving matrix and, when at least one of the RI/CRI and the CQI/PMI is required to be reported, write the at least one of the RI/CRI and the CQI/PMI into the interleaving matrix from a first column of the interleaving matrix according to the specified sequence; when the data information is required to be reported, determine the data information as the multiplexing sequence, skip the locations corresponding to at least one of the RI/CRI and/or the CQI/PMI and write the multiplexing sequence into the interleaving matrix; when the HARQ-ACK is also required to be reported, write the HARQ-ACK into the interleaving matrix upwards from the last row of the interleaving matrix, the HARQ-ACK being written into part of the columns or all of the columns; and read out the obtained interleaving matrix column by column to complete multiplexing and interleaving processing.

Herein, when the RI/CRI and the CQI/PMI are required to be reported, from the first column of the interleaving matrix, the RI/CRI is written at first and then the CQI/PMI is written.

In the embodiment of the disclosure, the processing subunit 2021 is further configured to establish the interleaving matrix and, when the RI/CRI is required to be reported, write the RI/CRI into the interleaving matrix downwards from the first row of the interleaving matrix, the RI/CRI being written into part of the columns or all of the columns; when the CQI/PMI is also required to be reported, write the CQI/PMI into the interleaving matrix downwards from a specified row, the CQI/PMI being written into part of the columns or all of the columns; when data is also required to be sent, skip the locations corresponding to at least one of the RI/CRI and the CQI/PMI and write the data into the interleaving matrix; when the HARQ-ACK is also required to be reported, write the HARQ-ACK into the interleaving matrix upwards from the last row of the interleaving matrix, the HARQ-ACK being written into part of the columns or all of the columns; and read out the obtained interleaving matrix column by column to complete multiplexing and interleaving processing.

The specified row is the first row, or the ending row of the written RI/CRI or a next row of the ending row of the written RI/CRI.

In the embodiment of the disclosure, the processing subunit 2021 is further configured to establish the interleaving matrix and, when the RI/CRI is required to be reported, write the RI/CRI into the interleaving matrix upwards from the last row of the interleaving matrix, the RI/CRI being written into part of the columns or all of the columns; when the CQI/PMI is also required to be reported, write the CQI/PMI into the interleaving matrix upwards from the specified row, the CQI/PMI being written into part of the columns or all of the columns; when data is also required to be sent, skip the locations corresponding to at least one of the RI/CRI and the CQI/PMI and write the data into the interleaving matrix; when the HARQ-ACK is also required to be reported, write the HARQ-ACK into the interleaving matrix downwards from the first row of the interleaving matrix, the HARQ-ACK being written into part of the columns or all of the columns; and read out the obtained interleaving matrix column by column to complete multiplexing and interleaving processing.

The specified row is the last row, or the ending row of the written RI/CRI or the previous row of the ending row of the written RI/CRI.

In the solution, part of the columns refer to one of:

columns corresponding to A symbols adjacent to the two sides of the symbol where the DMRS is located, A being a positive integer;

the column corresponding to the symbol where the DMRS is located and columns corresponding to B symbols adjacent to the two sides of the symbol where the DMRS is located, B being a nonnegative integer;

columns corresponding to C symbols adjacent to one side of the symbol where the DMRS is located, C being a positive integer;

the column corresponding to the symbol where the DMRS is located and columns corresponding to D symbols adjacent to one side of the symbol where the DMRS is located, D being a nonnegative integer;

first E columns, E being a positive integer less than or equal to N;

last F columns, F being a positive integer less than or equal to N; and

preset columns.

Adjacency refers to physical adjacency or logical adjacency.

When the data information is required to be transmitted on the PUSCH, the interleaving matrix is established and the data information is written into the interleaving matrix column by column.

In the solution, the interleaving matrix is determined by at least one of a transmission time of the target content, locations of the DMRS and an SRS configuration.

In the solution, when the interleaving matrix is written, the interleaving matrix is written according to the sequence of rows at first and then columns or the interleaving matrix is written according to a sequence of columns at first and then rows.

In the solution, when the DMRS and uplink information are multiplexed in a symbol, the locations corresponding to the DMRS in the interleaving matrix are required to be skipped when all of the uplink information is written into the interleaving matrix.

In the solution, a transmission manner when the predetermined transmission time of the UCI or the SRS is overlapped with the transmission time of the data information is determined according to at least one of the preset operation and the notification message of the base station. The transmission manner is indicated by at least one of: RRC signaling, a SIB and an uplink grant corresponding to the PUSCH.

In the solution, all or part of the UCI is aborted to be transmitted or all or part of the UCI is deferred to be transmitted.

In the solution, when the UCI includes HARQ-ACK information of M transport blocks, the HARQ-ACK information of all or part of the transport blocks is transmitted at the transmission time of the target content, M>1.

In the solution, the HARQ-ACK information of part of the transport blocks is transmitted at the transmission time of the target content, transmission durations of part of the transport blocks being all shorter than transmission durations of the other transport blocks.

In the solution, when the predetermined transmission time of the SRS is overlapped with the transmission time of the data information, no DMRS but the data information is transmitted at locations corresponding to all or part of DMRSs at the transmission time of the target content.

In the solution, when the predetermined transmission time of the UCI is overlapped with the transmission time of the data information, all or part of the UCI is transmitted according to the DMRS at the transmission time of the target content.

In the solution, all or part of the UCI is transmitted according to at least one of:

a frequency-domain resource occupied by the DMRS,
the symbol occupied by the DMRS and
a sequence corresponding to the DMRS.

A modulation symbol of all or part of the UCI is adopted to modulate the DMRS.

In the solution, a code rate corresponding to the information meets a specified threshold requirement.

In the solution, a code rate of the information on a specified symbol meets the specified threshold requirement.

In the solution, a code rate of the data information on first n symbols transmitting the data information is not higher than 0.931 or 0.93 or 1, n being less than or equal to the total number of symbols transmitting the data information.

Those skilled in the art should know that functions realized by each unit in the signal transmission device shown in FIG. 20 may be understood with reference to related descriptions in each embodiment.

During the practical application, all of the functions realized by each unit and subunits thereof in the signal transmission device may be realized by a Central Processing Unit (CPU), or Micro Processor Unit (MPU), or Digital Signal Processor (DSP), or Field Programmable Gate Array (FPGA) and the like in the signal transmission device.

When being implemented in form of software functional module and sold or used as an independent product, the signal transmission device of the embodiment of the disclosure may be stored in a computer-readable storage medium. Based on such an understanding, the technical solutions of the embodiments of the disclosure substantially or parts making contributions to the conventional art may be embodied in form of software product, and the computer software product is stored in a storage medium, including a plurality of instructions configured to enable a computer device (which may be a personal computer, a server, a network device or the like) to execute all or part of the method in each embodiment of the disclosure. The storage medium includes: various media capable of storing program codes such as a U disk, a mobile hard disk, a Read-Only Memory (ROM), a magnetic disk or an optical disk. As a consequence, the embodiments of the disclosure are not limited to any specific hardware and software combination.

Correspondingly, the embodiments of the disclosure also provide a computer storage medium, in which a computer program is stored, the computer program being configured to execute the signal transmission method of the embodiments of the disclosure.

In some embodiments provided by the disclosure, it is to be understood that the disclosed method and intelligent device may be implemented in another manner. The device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part of all of the units may be selected according to a practical requirement to achieve the purposes of the solutions of the embodiments.

In addition, each functional unit in each embodiment of the disclosure may be integrated into a second processing unit, each unit may also serve as an independent unit and two or more than two units may also be integrated into a unit. The integrated unit may be implemented in a hardware form and may also be implemented in form of hardware and software functional unit.

The above is only the specific implementation mode of the disclosure and not intended to limit the scope of protection as defined by the appended claims.

## INDUSTRIAL APPLICABILITY

According to the technical solutions of the embodiments of the disclosure, when the UCI or the data information is required to be transmitted on the PUSCH, the target content is processed and transmitted according to at least one of the preset operation and the notification message of the base station; and when the predetermined transmission time of the UCI or the SRS is overlapped with the transmission time of the data information, the target content is processed and transmitted according to at least one of the preset operation and the notification message of the base station. Implementing the technical solutions of the embodiments of the disclosure realizes transmission of the UCI on the PUSCH in a short TTI scenario.

## Claims

1.   A signal transmission method in a 3GPP system, comprising:

when Uplink Control Information, UCI, is required to be transmitted on a Physical Uplink Shared Channel, PUSCH, or when the UCI and uplink data are required to be transmitted on the PUSCH, processing and transmitting the UCI or the UCI and uplink data according to at least one of: a preset operation and a notification message of a base station;
wherein the UCI comprises at least one of: a Channel Quality Indicator, CQI, Precoding Matrix Indicator, PMI, a Hybrid Automatic Repeat Request-Acknowledgement, HARQ-ACK, a Rank Indication, RI, and a Channel State Information Reference Signal Resource Indicator, CRI;
wherein the step of processing and transmitting the UCI or the UCI and the uplink data comprises: performing multiplexing and interleaving processing on the UCI or on the UCI and uplink data, and bearing the processed UCI or the processed UCI and uplink data on the PUSCH,
wherein the step of performing multiplexing and interleaving processing on the UCI or on the UCI and uplink data comprises:

generating a multiplexing sequence, wherein when the UCI is transmitted on the PUSCH with uplink data and the UCI comprises the CQI and/or PMI the multiplexing sequence is obtained by cascading the CQI and/or PMI, and the uplink data; when the UCI is transmitted on the PUSCH with the uplink data but the UCI does not comprise the
CQI and/or PMI, the uplink data is determined as the multiplexing sequence; when the UCI is transmitted on the PUSCH without the uplink data and the UCI comprises the CQI and/or PMI, CQI and/or PMI is determined as the multiplexing sequence; establishing an interleaving matrix, and when the UCI comprises the RI or CRI, writing the RI or CRI into the interleaving matrix upwards from the last row of the interleaving matrix;
writing the multiplexing sequence into the interleaving matrix by skipping locations occupied by the or CRI;
when the UCI comprises the HARQ-ACK, writing the HARQ-ACK into the interleaving matrix upwards from a specified location of the interleaving matrix; and
reading out the obtained interleaving matrix column by column to complete multiplexing and interleaving processing.

2. The signal transmission method of claim 1, wherein the step of writing the HARQ-ACK into the interleaving matrix upwards from the specified location of the interleaving matrix comprises one of the following operations:

when the UCI comprises the RI or CRI and the HARQ-ACK, writing the HARQ-ACK into the interleaving matrix from a previous row of the end of the RI or CRI or writing it into the interleaving matrix from a non-RI or non-CRI location in an ending row of the RI or CRI; and
when the UCI comprises the HARQ-ACK but does not comprises the RI CRI, writing the HARQ-ACK into the interleaving matrix upwards from the last row of the interleaving matrix in a specified manner.

3. The signal transmission method of claim 1 or 2, wherein
writing the RI or CRI or the HARQ-ACK into all or part of the columns of the interleaving matrix.

4. The signal transmission method of claim 1, wherein

when the UCI comprises the RI or CRI, writing the RI or CRI into a first specified column upwards from the last row of the interleaving matrix in a specified manner; and
when the UCI comprises the HARQ-ACK, writing the HARQ-ACK into a second specified column upwards from the last row of the interleaving matrix in the specified manner.

5. The signal transmission method of claim 4, wherein

the first specified column refers to first z1 columns of the interleaving matrix and the second specified column refers to last z2 columns of the interleaving matrix;
wherein z1 and z2 are positive integers.

6. The signal transmission method of claim 4, wherein the first specified column refers to last z1 columns of the interleaving matrix and the second specified column refers to first z2 columns of the interleaving matrix, wherein z1 and z2 are positive integers.

7. The method of claim 4, wherein

the second specified column refers to the x columns corresponding to the x symbols adjacent to the two sides of the symbol where the DeModulation Reference Signal, DMRS, is located and the first specified column refers to y columns corresponding to y symbols adjacent to the second specified column;
wherein x and y are positive integers; and
adjacency refers to physical adjacency or logical adjacency.

8. A signal transmission device, device in a 3GPP system, comprising:

a processing and transmission unit (202), configured to, when Uplink Control Information, UCI, is required to be transmitted on a Physical Uplink Shared Channel, PUSCH, or when the UCI and uplink data are required to be transmitted on the PUSCH, perform multiplexing and interleaving processing on the UCI or on the UCI and the uplink data according to a notification message of a base station; and transmit the processed UCI or the processed UCI and uplink data on the PUSCH;

wherein the UCI comprises at least one of: a Channel Quality Indicator, CQI, Precoding Matrix Indicator, PMI, a Hybrid Automatic Repeat Request-Acknowledgement, HARQ-ACK, a Rank Indication, RI, and a Channel State Information Reference Signal Resource Indicator, CRI;

wherein the multiplexing and interleaving processing is performed on the UCI or on the UCI and the uplink data in the following manner:

a multiplexing sequence is generated, wherein when the UCI is transmitted on the PUSCH with uplink data and the UCI comprises the CQI and/or PMI, the multiplexing sequence is obtained by cascading the CQI and/or PMI and the uplink data; when the UCI is transmitted on the PUSCH with the uplink data but the UCI does not comprise the CQI and/or PMI, the uplink data is determined as the multiplexing sequence; when the UCI is transmitted on the PUSCH without the uplink data and the UCI comprises the CQI and/or PMI, the CQI and/or PMI is determined as the multiplexing sequence;

an interleaving matrix is established, and when the UCI comprises the RI or CRI, the RI or CRI is wrote into the interleaving matrix upwards from the last row of the interleaving matrix;

the multiplexing sequence is wrote into the interleaving matrix by skipping locations occupied by the RI or CRI;

when the UCI comprises the HARQ-ACK, the HARQ-ACK is wrote into the interleaving matrix upwards from a specified location of the interleaving matrix; and

the obtained interleaving matrix is read out column by column to complete multiplexing and interleaving processing.

9. A computer-readable storage medium comprising instructions which, when executed by a computer, cause the computer to carry out the signal transmission method of any one of claims 1-7.

**Patentansprüche**

1. Signalübertragungsverfahren in einem 3GPP-System, umfassend:

wenn Uplink-Steuerinformationen, UCI, auf einem gemeinsam genutzten physischen Uplink-Kanal, PUSCH, übertragen werden müssen, oder wenn die UCI und die Uplink-Daten auf dem PUSCH übertragen werden müssen, Verarbeiten und Übertragen der UCI oder der UCI und der Uplink-Daten gemäß mindestens eine von: einer voreingestellten Operation und einer Benachrichtigungsnachricht einer Basisstation;

wobei die UCI mindestens eines der folgenden umfasst: einen Kanalqualitätsindikator, CQI, einen Vorcodierungsmatrixindikator, PMI, eine hybride automatische Wiederholungsanforderungsbestätigung, HARQ-ACK, eine Ranganzeige, RI, und einen Kanalzustandsinformations-Referenzsignalressourcenindikator, CRI;

wobei der Schritt des Verarbeitens und Übertragens der UCI oder der UCI und der Uplink-Daten umfasst: Durchführen einer Multiplex- und Verschachtelungsverarbeitung auf den UCI oder auf den UCI und den Uplink-Daten und Tragen der verarbeiteten UCI oder der verarbeiteten UCI und Uplink-Daten auf dem PUSCH;

wobei der Schritt des Durchführens einer Multiplex- und Verschachtelungsverarbeitung an der UCI oder an den UCI und den Uplink-Daten umfasst:

Erzeugen einer Multiplexsequenz, wobei, wenn die UCI auf dem PUSCH mit Uplink-Daten übertragen wird, und die UCI den CQI und/oder PMI umfasst, die Multiplexsequenz durch Kaskadieren des CQI und/oder PMI und der Uplink-Daten erhalten wird; wenn die UCI mit den Uplink-Daten auf dem PUSCH übertragen wird, die UCI jedoch nicht den CQI und/oder PMI umfasst, die Uplink-Daten als Multiplexsequenz bestimmt werden; wenn die UCI auf dem PUSCH ohne die Uplink-Daten übertragen wird, und die UCI den CQI und/oder PMI umfasst, der CQI und/oder PMI als Multiplexsequenz bestimmt werden;

Einrichten einer Verschachtelungsmatrix, und wenn die UCI die RI oder den CRI umfasst, Schreiben der RI oder des CRI in die Verschachtelungsmatrix aufwärts von der letzten Zeile der Verschachtelungsmatrix;

Schreiben der Multiplexsequenz in die Verschachtelungsmatrix durch Überspringen von Stellen, die von der RI oder dem CRI besetzt sind;

wenn die UCI die HARQ-ACK umfasst, Schreiben der HARQ-ACK in die Verschachtelungsmatrix aufwärts von einer bestimmten Stelle der Verschachtelungsmatrix; und

Auslesen der erhaltenen Verschachtelungsmatrix Spalte für Spalte, um die Multiplex- und Verschachtelungsverarbeitung abzuschließen.

2. Signalübertragungsverfahren nach Anspruch 1, wobei der Schritt des Schreibens der HARQ-ACK in die Verschachtelungsmatrix aufwärts von der angegebenen Stelle der Verschachtelungsmatrix eine der folgenden Operationen umfasst:

wenn die UCI die RI oder den CRI und die HARQ-ACK umfasst, Schreiben der HARQ-ACK in die Verschachtelungsmatrix aus einer vorherigen Zeile des Endes der RI oder des CRI oder Schreiben der HARQ-ACK in die Verschachtelungsmatrix von einer Nicht-RI- oder Nicht-CRI-Stelle in einer Endzeile der RI oder des CRI; und wenn die UCI die HARQ-ACK umfasst, aber nicht die RI oder den CRI, Schreiben der HARQ-ACK in die Verschachtelungsmatrix aufwärts von der letzten Zeile der Verschachtelungsmatrix auf eine bestimmte Weise.

3. Signalübertragungsverfahren nach Anspruch 1 oder 2, wobei Schreiben der RI oder des CRI oder der HARQ-ACK in alle oder einen Teil der Spalten der Verschachtelungsmatrix.

4. Signalübertragungsverfahren nach Anspruch 1, wobei
wenn die UCI die RI oder den CRI umfasst, Schreiben der RI oder des CRI in einer ersten angegebenen Spalte aufwärts von der letzten Zeile der Verschachtelungsmatrix auf eine bestimmte Weise; und
wenn die UCI die HARQ-ACK umfasst, Schreiben der HARQ-ACK in einer zweiten angegebenen Spalte aufwärts von der letzten Zeile der Verschachtelungsmatrix auf eine bestimmte Weise.

5. Signalübertragungsverfahren nach Anspruch 4, wobei
die erste angegebene Spalte sich auf die ersten z1-Spalten der Verschachtelungsmatrix bezieht, und die zweite angegebene Spalte sich auf die letzten z2-Spalten der Verschachtelungsmatrix bezieht,
wobei z1 und z2 positive ganze Zahlen sind.

6. Signalübertragungsverfahren nach Anspruch 4, wobei sich die erste spezifizierte Spalte auf die letzten z1 Spalten der Verschachtelungsmatrix bezieht, und die zweite spezifizierte Spalte sich auf die ersten z2 Spalten der Verschachtelungsmatrix bezieht, wobei z1 und z2 positive ganze Zahlen sind.

7. Verfahren nach Anspruch 4, wobei die zweite angegebene Spalte bezieht sich auf die x-Spalten, die den x-Symbolen neben den beiden Seiten des Symbols entsprechen, auf denen sich das DeModulation-Referenzsignal, DMRS, befindet, und die erste angegebene Spalte bezieht sich auf y-Spalten, die den y-Symbolen neben der zweiten angegebenen Säule entsprechen;
wobei x und y positive ganze Zahlen sind; und
die Nachbarschaft sich auf physische Nachbarschaft oder logische Nachbarschaft bezieht.

8. Signalübertragungsvorrichtung, Vorrichtung in einem 3GPP-System, umfassend:

eine Verarbeitungs- und Übertragungseinheit (202), die so konfiguriert ist, dass, wenn die Uplink-Steuerinformationen, UCI, auf einem gemeinsam genutzten physischen Uplink-Kanal, PUSCH, übertragen werden müssen, oder wenn die UCI und Uplink-Daten auf dem PUSCH übertragen werden müssen, Durchführen einer Multiplex- und Verschachtelungsverarbeitung auf der UCI oder auf der UCI und den Uplink-Daten gemäß einer Benachrichtigungsnachricht einer Basisstation; und Übertragen der verarbeiteten UCI oder der verarbeiteten UCI und Uplink-Daten auf dem PUSCH;
wobei die UCI mindestens eines der folgenden umfasst: einen Kanalqualitätsindikator, CQI, einen Vorcodierungsmatrixindikator, PMI, eine hybride automatische Wiederholungsanforderungsbestätigung, HARQ-ACK, eine Ranganzeige, RI, und einen Kanalzustandsinformations-Referenzsignalressourcenindikator, CRI;
wobei die Multiplex- und Verschachtelungsverarbeitung an den UCI oder an den UCI und den Uplink-Daten auf folgende Weise durchgeführt wird:

es wird eine Multiplexsequenz erzeugt, wobei, wenn die UCI mit Uplink-Daten auf dem PUSCH übertragen werden, und die UCI den CQI und/oder PMI umfasst, die Multiplexsequenz durch Kaskadieren des CQI und/oder PMI und der Uplink-Daten erhalten wird; wenn die UCI mit den Uplink-Daten auf dem PUSCH übertragen wird, die UCI jedoch nicht den CQI und/oder PMI umfasst, die Uplink-Daten als Multiplexsequenz bestimmt werden; wenn die UCI auf dem PUSCH ohne die Uplink-Daten übertragen wird, und die UCI den CQI und/oder PMI umfasst, der CQI und/oder PMI als Multiplexsequenz bestimmt werden;
es wird eine Verschachtelungsmatrix eingerichtet, und wenn die UCI die RI oder den CRI umfasst, die RI oder den CRI von der letzten Zeile der Verschachtelungsmatrix aufwärts in die Verschachtelungsmatrix geschrieben wird;
die Multiplexsequenz in die Verschachtelungsmatrix geschrieben wird, durch Überspringen von Stellen, die von der RI oder dem CRI besetzt sind;

wenn die UCI die HARQ-ACK umfasst, die HARQ-ACK von einer bestimmten Stelle der Verschachtelungsmatrix aufwärts in die Verschachtelungsmatrix geschrieben wird; und

die erhaltene Verschachtelungsmatrix Spalte für Spalte ausgelesen wird, um die Multiplex- und Verschachtelungsverarbeitung abzuschließen.

9. Computerlesbares Speichermedium, umfassend Anweisungen, die, wenn sie von einem Computer ausgeführt werden, den Computer veranlassen, das Signalübertragungsverfahren nach einem der Ansprüche 1 bis 7 auszuführen.

**Revendications**

1. Procédé de transmission de signaux dans un système 3GPP, comprenant:

lorsque des informations de commande de liaison montante, UCI, doivent être transmises sur un canal partagé de liaison montante physique, PUSCH, ou lorsque les UCI et les données de liaison montante doivent être transmises sur le PUSCH, traiter et transmettre des UCI ou des UCI et des données de liaison montante selon au moins l'un entre: une opération prédéfinie et un message de notification d'une station de base;

où les UCI comprennent au moins l'un parmi: un indicateur de qualité de canal, CQI, un indicateur de matrice de précodage, PMI, un accusé de réception de demande de répétition automatique hybride, HARQ-ACK, une indication de rang, RI, et un indicateur de ressource de signal de référence d'informations d'état de canal, CRI;

où l'étape de traitement et transmission des UCI ou des UCI et des données de liaison montante comprend: exécuter un traitement de multiplexage et d'entrelacement sur les UCI ou sur les UCI et les données de liaison montante, et porter les UCI traités ou les UCI traités et les données de liaison montante traités sur le PUSCH,

où l'étape d'exécution d'un traitement de multiplexage et d'entrelacement sur les UCI ou sur les UCI et les données de liaison montante comprend:

générer une séquence de multiplexage, où lorsque les UCI sont transmises sur le PUSCH avec des données de liaison montante et les UCI comprennent le CQI et/ou PMI, la séquence de multiplexage est obtenue en mettant en cascade le CQI et/ou PMI, et les données de liaison montante; lorsque les UCI sont transmises sur le PUSCH avec les données de liaison montante mais les UCI ne comprennent pas le CQI et/ou PMI, les données de liaison montante sont déterminées comme la séquence de multiplexage; lorsque les UCI sont transmises sur le PUSCH sans les données de liaison montante et les UCI comprennent le CQI et/ou PMI, le CQI et/ou PMI est déterminé comme la séquence de multiplexage;

établir une matrice d'entrelacement, et lorsque les UCI comprennent la RI ou le CRI, écrire la RI ou le CRI dans la matrice d'entrelacement vers le haut à partir de la dernière ligne de la matrice d'entrelacement;

écrire la séquence de multiplexage dans la matrice d'entrelacement en sautant des emplacements occupés par la RI ou le CRI;

lorsque les UCI comprennent le HARQ-ACK, écrire le HARQ-ACK dans la matrice d'entrelacement vers le haut à partir d'un emplacement spécifié de la matrice d'entrelacement; et

lire la matrice d'entrelacement obtenue colonne par colonne pour compléter le traitement de multiplexage et d'entrelacement.

2. Procédé de transmission de signaux selon la revendication 1, dans lequel l'étape d'écriture du HARQ-ACK dans la matrice d'entrelacement vers le haut à partir de l'emplacement spécifié de la matrice d'entrelacement comprend l'une des opérations suivantes:

lorsque les UCI comprennent la RI ou le CRI et le HARQ-ACK, écrire le HARQ-ACK dans la matrice d'entrelacement à partir d'une ligne précédente de la fin de la RI ou du CRI ou l'écrire dans la matrice d'entrelacement à partir d'un emplacement de non-RI ou non-CRI dans une ligne finale de la RI ou du CRI; et

lorsque les UCI comprennent le HARQ-ACK mais ne comprennent pas la RI ou le CRI, écrire le HARQ-ACK dans la matrice d'entrelacement vers le haut à partir de la dernière ligne de la matrice d'entrelacement d'une manière spécifiée.

3. Procédé de transmission de signaux selon la revendication 1 ou 2, dans lequel écrire la RI ou le CRI ou le HARQ-ACK dans tout ou partie des colonnes de la matrice d'entrelacement.

4. Procédé de transmission de signaux selon la revendication 1, dans lequel

lorsque les UCI comprennent la RI ou le CRI, écrire la RI ou le CRI dans une première colonne vers le haut à partir de la dernière ligne de la matrice d'entrelacement d'une manière spécifiée; et

lorsque les UCI comprennent le HARQ-ACK, écrire le HARQ-ACK dans une deuxième colonne spécifiée vers le haut à partir de la dernière ligne de la matrice d'entrelacement de la manière spécifiée.

5.  Procédé de transmission de signaux selon la revendication 4, dans lequel

    la première colonne spécifiée se réfère aux premières colonnes $z1$ de la matrice d'entrelacement et la deuxième colonne spécifiée se réfère aux dernières colonnes $z2$ de la matrice d'entrelacement;

    où $z1$ et $z2$ sont des entiers positifs.

6.  Procédé de transmission de signaux selon la revendication 4, dans lequel la première colonne spécifiée se réfère aux dernières colonnes $z1$ de la matrice d'entrelacement et la deuxième colonne spécifiée se réfère aux premières colonnes $z2$ de la matrice d'entrelacement, où $z1$ et $z2$ sont des entiers positifs.

7.  Procédé selon la revendication 4, dans lequel la deuxième colonne spécifiée fait référence aux colonnes x correspondant aux symboles x adjacents aux deux côtés du symbole où se trouve le signal de référence de démodulation, DMRS, et la première colonne spécifiée fait référence aux colonnes y correspondant aux symboles y adjacents à la deuxième colonne spécifiée;

    où x et y sont des entiers positifs; et l'adjacence fait référence à l'adjacence physique ou à l'adjacence logique.

8.  Dispositif de transmission de signaux, dispositif dans un système 3GPP, comprenant:

    une unité de traitement et de transmission (202), configurée pour, lorsque des informations de commande de liaison montante, UCI, doivent être transmises sur un canal partagé de liaison montante physique, PUSCH, ou lorsque les UCI et les données de liaison montante doivent être transmises sur le PUSCH, exécuter un traitement de multiplexage et d'entrelacement sur les UCI ou sur les UCI et les données de liaison montante selon un message de notification d'une station de base; et transmettre les UCI traités ou les UCI traités et les données de liaison montante traités sur le PUSCH;

    où les UCI comprennent au moins l'un parmi: un indicateur de qualité de canal, CQI, un indicateur de matrice de précodage, PMI, un accusé de réception de demande de répétition automatique hybride, HARQ-ACK, une indication de rang, RI, et un indicateur de ressource de signal de référence d'informations d'état de canal, CRI;

    où le traitement de multiplexage et d'entrelacement est exécuté sur les UCI ou sur les UCI et les données de liaison montante de la manière suivante:

    une séquence de multiplexage est générée, où lorsque les UCI sont transmises sur le PUSCH avec des données de liaison montante et les UCI comprennent le CQI et/ou PMI, la séquence de multiplexage est obtenue en mettant en cascade le CQI et/ou PMI et les données de liaison montante; lorsque les UCI sont transmises sur le PUSCH avec les données de liaison montante mais les UCI ne comprennent pas le CQI et/ou le PMI, les données de liaison montante sont déterminées comme la séquence de multiplexage; lorsque les UCI sont transmises sur le PUSCH sans les données de liaison montante et les UCI comprennent le CQI et/ou PMI, le CQI et/ou PMI est déterminé comme la séquence de multiplexage;

    une matrice d'entrelacement est établie, et lorsque les UCI comprennent la RI ou le CRI, la RI ou le CRI est écrit dans la matrice d'entrelacement vers le haut à partir de la dernière ligne de la matrice d'entrelacement;

    la séquence de multiplexage est écrite dans la matrice d'entrelacement en sautant des emplacements occupés par la RI ou le CRI;

    lorsque les UCI comprennent le HARQ-ACK, le HARQ-ACK est écrit dans la matrice d'entrelacement vers le haut à partir d'un emplacement spécifié de la matrice d'entrelacement; et

    la matrice d'entrelacement obtenue est lue colonne par colonne pour compléter le traitement de multiplexage et d'entrelacement.

9.  Support de stockage lisible par ordinateur comprenant des instructions qui, lorsqu'elles sont exécutées par un ordinateur, amènent l'ordinateur à effectuer le procédé de transmission de signaux selon l'une quelconque des revendications 1 à 7.

When at least one of UCI and data information is required to be transmitted on a PUSCH, a target content is processed and transmitted according to at least one of a preset operation and a notification message of a base station

101

When a predetermined transmission time of the UCI or an SRS is overlapped with a transmission time of the data information, the target content is processed and transmitted according to at least one of the preset operation and the notification message of the base station

102

**FIG. 1**

DMRS

RI

CQI/PMI

HARQ-ACK

Uplink data

0 1 2 3 4 5 6

**FIG. 2**

**FIG. 3**

**FIG. 4**

DMRS

RI

CQI/PMI

HARQ-ACK

Uplink data

0  1

**FIG. 5**

DMRS

RI

CQI/PMI

HARQ-ACK

Uplink data

**FIG. 6**

DMRS

RI

CQI/PMI

HARQ-ACK

Uplink data

0 1 2 3 4 5 6

**FIG. 7**

DMRS

RI

CQI/PMI

HARQ-ACK

Uplink data

0 1 2 3

**FIG. 8**

DMRS

RI

CQI/PMI

HARQ-ACK

Uplink data

0 1 2 3

**FIG. 9**

DMRS

RI

CQI/PMI

HARQ-ACK

Uplink data

**FIG. 10**

DMRS

RI

CQI/PMI

HARQ-ACK

Uplink data

0 1 2 3

**FIG. 11**

DMRS

RI

CQI/PMI

HARQ-ACK

Uplink data

0 1 2 3 4 5 6

**FIG. 12**

DMRS

RI

CQI/PMI

HARQ-ACK

Uplink data

0 1 2 3

**FIG. 13**

DMRS

RI

CQI/PMI

HARQ-ACK

Uplink data

0 1 2 3

**FIG. 14**

DMRS

RI

CQI/PMI

HARQ-ACK

Uplink data

0 1 2 3

**FIG. 15**

DMRS

RI

CQI/PMI

HARQ-ACK

Uplink data

0 1 2 3 4 5 6

**FIG. 16**

⋮    ▦ DMRS

☐ Uplink data

0  1  2  3  4

**FIG. 17**

| TTI | TTI | TTI |
| #0 | #1 | #2 |

▦ DMRS

▨ RI

▨ CQI/PMI

▨ HARQ-ACK

☐ Uplink data

⋮

0  1  2  3  4  5  6

**FIG. 18**

DMRS

RI

CQI/PMI

HARQ-ACK

Uplink data

0 1 2 3 4 5 6 0 1 2 3 4 5 6

**FIG. 19**

**FIG. 20**

DMRS

RI

CQI/PMI

HARQ-ACK

Uplink data

0  1

**FIG. 21**

CUDB

CP

MM    SM    ...

Terminal    Base station    UP    PDN

**FIG. 22**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012320852 A1

- US 2011310855 A1